# EUROPEAN PATENT SPECIFICATION

(11) **EP 4 128 988 B1**
(45) Date of publication and mention of the grant of the patent: **08.07.2026**
(21) Application number: 21720948.5
(22) Date of filing: 09.04.2021
(51) Int. Cl.: H04W 76/15

(54) **SERVICE AREA OF WIRELESS DEVICE**
DIENSTBEREICH EINER DRAHTLOSEN VORRICHTUNG
ZONE DE SERVICE DE DISPOSITIF SANS FIL

(30) Priority: 09.04.2020 US 202063007690 P
(43) Date of publication of application: 08.02.2023
(73) Proprietor: Ofinno, LLC, Reston, VA 20190 (US)
(72) Inventor: RYU, Jinsook, Reston, Virginia 20190 (US); DINAN, Esmael Hejazi, Reston, Virginia 20190 (US); PARK, Kyungmin, Reston, Virginia 20190 (US); TALEBI FARD, Peyman, Reston, Virginia 20190 (US); KIM, Taehun, Reston, Virginia 20190 (US); QIAO, Weihua, Reston, Virginia 20190 (US)
(74) Representative: Westphal, Mussgnug & Partner, Patentanwälte mbB
(86) International application number: PCT/US2021/026573
(87) International publication number: WO 2021/207596

(56) References cited:
- US-A1- 2014 308 955
- US-A1- 2018 084 539
- US-A1- 2019 349 139

## Description

### TECHNICAL FIELD

This application relates to the field of wireless communication systems such as 4G communication systems (e.g., LTE), 5G communication systems, other communication systems compatible with 4G and/or 5G communication systems, and related methods, systems and apparatuses.

### BACKGROUND

With regard to the prior art, reference is made to the publications US 2014/308955 A1, US 2019/349139 A1, and US 2018/084539 A1.

### SUMMARY

The invention is set out by the appended claims. Accordingly, a method for base stations of a wireless communication system is described herein. In accordance with one embodiment, the method includes receiving - by a second base station from a first base station - a message indicating that a packet data unit (PDU) session of a wireless device is allowed in an area, and sending - by the second base station to the first base station and in response to the message - radio resource control (RRC) configuration parameters of one or more cells determined based on the area. Moreover, a corresponding first base station as well as respective base stations and related apparatuses, devices and systems are described herein.

### BRIEF DESCRIPTION OF THE SEVERAL VIEWS OF THE DRAWINGS

Examples of several of the various embodiments of the present disclosure are described herein with reference to the drawings.
FIG. 1 is a diagram of an example RAN architecture as per an aspect of an embodiment of the present disclosure.
FIG. 2A is a diagram of an example user plane protocol stack as per an aspect of an embodiment of the present disclosure.
FIG.2B is a diagram of an example control plane protocol stack as per an aspect of an embodiment of the present disclosure.
FIG. 3 is a diagram of an example wireless device and two base stations as per an aspect of an embodiment of the present disclosure.
FIG. 4A, FIG. 4B, FIG. 4C and FIG. 4D are example diagrams for uplink and downlink signal transmission as per an aspect of an embodiment of the present disclosure.
FIG. 5A is a diagram of an example uplink channel mapping and example uplink physical signals as per an aspect of an embodiment of the present disclosure.
FIG. 5B is a diagram of an example downlink channel mapping and example downlink physical signals as per an aspect of an embodiment of the present disclosure.
FIG. 6 is a diagram depicting an example transmission time or reception time for a carrier as per an aspect of an embodiment of the present disclosure.
FIG. 7A and FIG. 7B are diagrams depicting example sets of OFDM subcarriers as per an aspect of an embodiment of the present disclosure.
FIG. 8 is a diagram depicting example OFDM radio resources as per an aspect of an embodiment of the present disclosure.
FIG. 9A is a diagram depicting an example CSI-RS and/or SS block transmission in a multi-beam system.
FIG. 9B is a diagram depicting an example downlink beam management procedure as per an aspect of an embodiment of the present disclosure.
FIG. 10 is an example diagram of configured BWPs as per an aspect of an embodiment of the present disclosure.
FIG. 11A, and FIG. 11B are diagrams of an example multi connectivity as per an aspect of an embodiment of the present disclosure.
FIG. 12 is a diagram of an example random access procedure as per an aspect of an embodiment of the present disclosure.
FIG. 13 is a structure of example MAC entities as per an aspect of an embodiment of the present disclosure.
FIG. 14 is a diagram of an example RAN architecture as per an aspect of an embodiment of the present disclosure.
FIG. 15 illustrates a service-based architecture for a 5G network regarding interaction between a control plane (CP) and a user plane (UP).
FIG. 16 is an example diagram of an aspect of an embodiment of the present disclosure.
FIG. 17 is an example diagram of an aspect of an embodiment of the present disclosure.
FIG. 18 is an example diagram of an aspect of an embodiment of the present disclosure.
FIG. 19 is an example diagram of an aspect of an embodiment of the present disclosure.
FIG. 20 is an example diagram of an aspect of an embodiment of the present disclosure.
FIG. 21 is an example diagram of an aspect of an embodiment of the present disclosure.
FIG. 22 is an example diagram of an aspect of an embodiment of the present disclosure.

### DETAILED DESCRIPTION OF EMBODIMENTS

Example embodiments of the present disclosure enable operation of wireless communication systems. Embodiments of the technology disclosed herein may be employed in the technical field of multicarrier communication systems. More particularly, the embodiments of the technology disclosed herein may relate to radio access networks in multicarrier communication systems.

The following Acronyms are used throughout the present disclosure:
- 3GPP: 3rd Generation Partnership Project
- 5GC: 5G Core Network
- ACK: Acknowledgement
- AMF: Access and Mobility Management Function
- ARQ: Automatic Repeat Request
- AS: Access Stratum
- ASIC: Application-Specific Integrated Circuit
- BA: Bandwidth Adaptation
- BCCH: Broadcast Control Channel
- BCH: Broadcast Channel
- BPSK: Binary Phase Shift Keying
- BWP: Bandwidth Part
- CA: Carrier Aggregation
- CC: Component Carrier
- CCCH: Common Control CHannel
- CDMA: Code Division Multiple Access
- CN: Core Network
- CP: Cyclic Prefix
- CP-OFDM: Cyclic Prefix- Orthogonal Frequency Division Multiplex
- C-RNTI: Cell-Radio Network Temporary Identifier
- CS: Configured Scheduling
- CSI: Channel State Information
- CSI-RS: Channel State Information-Reference Signal
- CQI: Channel Quality Indicator
- CSS: Common Search Space
- CU: Central Unit
- DC: Dual Connectivity
- DCCH: Dedicated Control Channel
- DCI: Downlink Control Information
- DL: Downlink
- DL-SCH: Downlink Shared CHannel
- DM-RS: DeModulation Reference Signal
- DRB: Data Radio Bearer
- DRX: Discontinuous Reception
- DTCH: Dedicated Traffic Channel
- DU: Distributed Unit
- EPC: Evolved Packet Core
- E-UTRA: Evolved UMTS Terrestrial Radio Access
- E-UTRAN: Evolved-Universal Terrestrial Radio Access Network
- FDD: Frequency Division Duplex
- FPGA: Field Programmable Gate Arrays
- F1-C: F1-Control plane
- F1-U: F1-User plane
- gNB: next generation Node B
- HARQ: Hybrid Automatic Repeat reQuest
- HDL: Hardware Description Languages
- IE: Information Element
- IP: Internet Protocol
- LCID: Logical Channel Identifier
- LTE: Long Term Evolution
- MAC: Media Access Control
- MCG: Master Cell Group
- MCS: Modulation and Coding Scheme
- MeNB: Master evolved Node B
- MIB: Master Information Block
- MME: Mobility Management Entity
- MN: Master Node
- NACK: Negative Acknowledgement
- NAS: Non-Access Stratum
- NG CP: Next Generation Control Plane
- NGC: Next Generation Core
- NG-C: NG-Control plane
- ng-eNB: next generation evolved Node B
- NG-U: NG-User plane
- NR: New Radio
- NR MAC: New Radio MAC
- NR PDCP: New Radio PDCP
- NR PHY: New Radio PHYsical
- NR RLC: New Radio RLC
- NR RRC: New Radio RRC
- NSSAI: Network Slice Selection Assistance Information
- O&M: Operation and Maintenance
- OFDM: orthogonal Frequency Division Multiplexing
- PBCH: Physical Broadcast CHannel
- PCC: Primary Component Carrier
- PCCH: Paging Control CHannel
- PCell: Primary Cell
- PCH: Paging CHannel
- PDCCH: Physical Downlink Control CHannel
- PDCP: Packet Data Convergence Protocol
- PDSCH: Physical Downlink Shared CHannel
- PDU: Protocol Data Unit
- PHICH: Physical HARQ Indicator CHannel
- PHY: PHYsical
- PLMN: Public Land Mobile Network
- PMI: Precoding Matrix Indicator
- PRACH: Physical Random Access CHannel
- PRB: Physical Resource Block
- PSCell: Primary Secondary Cell
- PSS: Primary Synchronization Signal
- pTAG: primary Timing Advance Group
- PT-RS: Phase Tracking Reference Signal
- PUCCH: Physical Uplink Control CHannel
- PUSCH: Physical Uplink Shared CHannel
- QAM: Quadrature Amplitude Modulation
- QFI: Quality of Service Indicator
- QoS: Quality of Service
- QPSK: Quadrature Phase Shift Keying
- RA: Random Access
- RACH: Random Access CHannel
- RAN: Radio Access Network
- RAT: Radio Access Technology
- RA-RNTI: Random Access-Radio Network Temporary Identifier
- RB: Resource Blocks
- RBG: Resource Block Groups
- RI: Rank indicator
- RLC: Radio Link Control
- RRC: Radio Resource Control
- RS: Reference Signal
- RSRP: Reference Signal Received Power
- SCC: Secondary Component Carrier
- SCell: Secondary Cell
- SCG: Secondary Cell Group
- SC-FDMA: Single Carrier-Frequency Division Multiple Access
- SDAP: Service Data Adaptation Protocol
- SDU: Service Data Unit
- SeNB: Secondary evolved Node B
- SFN: System Frame Number
- S-GW: Serving GateWay
- SI: System Information
- SIB: System Information Block
- SMF: Session Management Function
- SN: Secondary Node
- SpCell: Special Cell
- SRB: Signaling Radio Bearer
- SRS: Sounding Reference Signal
- SS: Synchronization Signal
- SSS: Secondary Synchronization Signal
- sTAG: secondary Timing Advance Group
- TA: Timing Advance
- TAG: Timing Advance Group
- TAI: Tracking Area Identifier
- TAT: Time Alignment Timer
- TB: Transport Block
- TC-RNTI: Temporary Cell-Radio Network Temporary Identifier
- TDD: Time Division Duplex
- TDMA: Time Division Multiple Access
- TTI: Transmission Time Interval
- UCI: Uplink Control Information
- UE: User Equipment
- UL: Uplink
- UL-SCH: Uplink Shared CHannel
- UPF: User Plane Function
- UPGW: User Plane Gateway
- VHDL: VHSIC Hardware Description Language
- Xn-C: Xn-Control plane
- Xn-U: Xn-User plane

Example embodiments of the disclosure may be implemented using various physical layer modulation and transmission mechanisms. Example transmission mechanisms may include, but are not limited to: Code Division Multiple Access (CDMA), Orthogonal Frequency Division Multiple Access (OFDMA), Time Division Multiple Access (TDMA), Wavelet technologies, and/or the like. Hybrid transmission mechanisms such as TDMA/CDMA, and OFDM/CDMA may also be employed. Various modulation schemes may be applied for signal transmission in the physical layer. Examples of modulation schemes include, but are not limited to: phase, amplitude, code, a combination of these, and/or the like. An example radio transmission method may implement Quadrature Amplitude Modulation (QAM) using Binary Phase Shift Keying (BPSK), Quadrature Phase Shift Keying (QPSK), 16-QAM, 64-QAM, 256-QAM, and/or the like. Physical radio transmission may be enhanced by dynamically or semi-dynamically changing the modulation and coding scheme depending on transmission requirements and radio conditions.

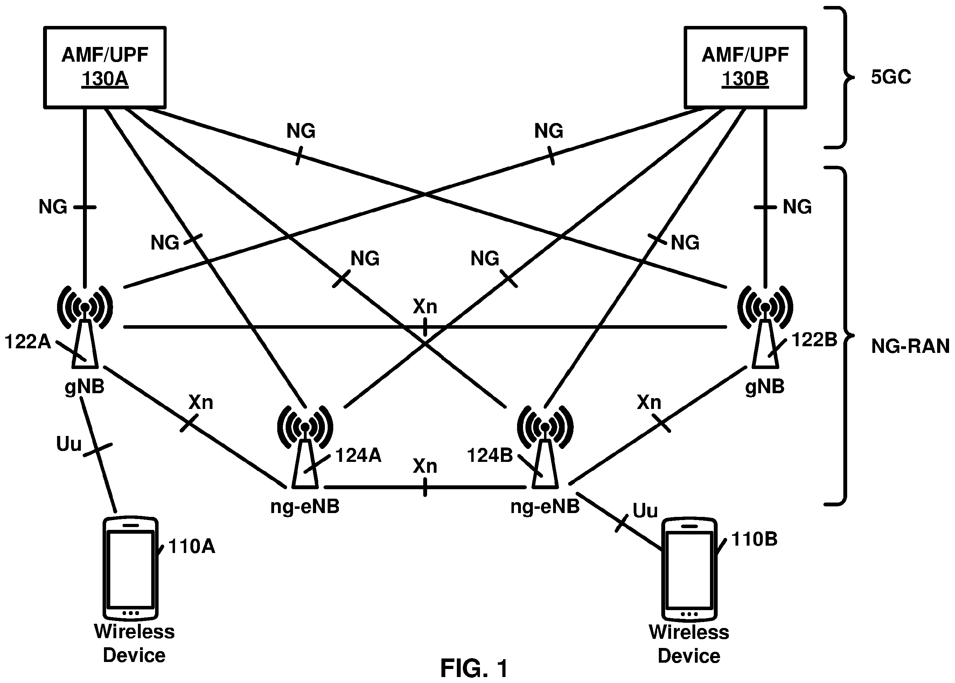

FIG. 1 is an example Radio Access Network (RAN) architecture as per an aspect of an embodiment of the present disclosure. As illustrated in this example, a RAN node may be a next generation Node B (gNB) (*e.g.* 120A, 120B) providing New Radio (NR) user plane and control plane protocol terminations towards a first wireless device (*e.g.* 110A). In an example, a RAN node may be a next generation evolved Node B (ng-eNB) (*e.g.* 120C, 120D), providing Evolved UMTS Terrestrial Radio Access (E-UTRA) user plane and control plane protocol terminations towards a second wireless device (*e.g.* 110B). The first wireless device may communicate with a gNB over a Uu interface. The second wireless device may communicate with a ng-eNB over a Uu interface.

A gNB or an ng-eNB may host functions such as radio resource management and scheduling, IP header compression, encryption and integrity protection of data, selection of Access and Mobility Management Function (AMF) at User Equipment (UE) attachment, routing of user plane and control plane data, connection setup and release, scheduling and transmission of paging messages (originated from the AMF), scheduling and transmission of system broadcast information (originated from the AMF or Operation and Maintenance (O&M)), measurement and measurement reporting configuration, transport level packet marking in the uplink, session management, support of network slicing, Quality of Service (QoS) flow management and mapping to data radio bearers, support of UEs in RRC_INACTIVE state, distribution function for Non-Access Stratum (NAS) messages, RAN sharing, dual connectivity or tight interworking between NR and E-UTRA.

In an example, one or more gNBs and/or one or more ng-eNBs may be interconnected with each other by means of Xn interface. A gNB or an ng-eNB may be connected by means of NG interfaces to 5G Core Network (5GC). In an example, 5GC may comprise one or more AMF/User Plan Function (UPF) functions (*e.g.* 130A or 130B). A gNB or an ng-eNB may be connected to a UPF by means of an NG-User plane (NG-U) interface. The NG-U interface may provide delivery (*e*.*g*. non-guaranteed delivery) of user plane Protocol Data Units (PDUs) between a RAN node and the UPF. A gNB or an ng-eNB may be connected to an AMF by means of an NG-Control plane (NG-C) interface. The NG-C interface may provide functions such as NG interface management, UE context management, UE mobility management, transport of NAS messages, paging, PDU session management, configuration transfer or warning message transmission.

In an example, a UPF may host functions such as anchor point for intra-/inter-Radio Access Technology (RAT) mobility (when applicable), external PDU session point of interconnect to data network, packet routing and forwarding, packet inspection and user plane part of policy rule enforcement, traffic usage reporting, uplink classifier to support routing traffic flows to a data network, branching point to support multi-homed PDU session, QoS handling for user plane, *e.g.* packet filtering, gating, Uplink (UL)/Downlink (DL) rate enforcement, uplink traffic verification (*e*.*g*. Service Data Flow (SDF) to QoS flow mapping), downlink packet buffering and/or downlink data notification triggering.

In an example, an AMF may host functions such as NAS signaling termination, NAS signaling security, Access Stratum (AS) security control, inter Core Network (CN) node signaling for mobility between 3^{rd} Generation Partnership Project (3GPP) access networks, idle mode UE reachability (e.g., control and execution of paging retransmission), registration area management, support of intra-system and inter-system mobility, access authentication, access authorization including check of roaming rights, mobility management control (subscription and policies), support of network slicing and/or Session Management Function (SMF) selection.

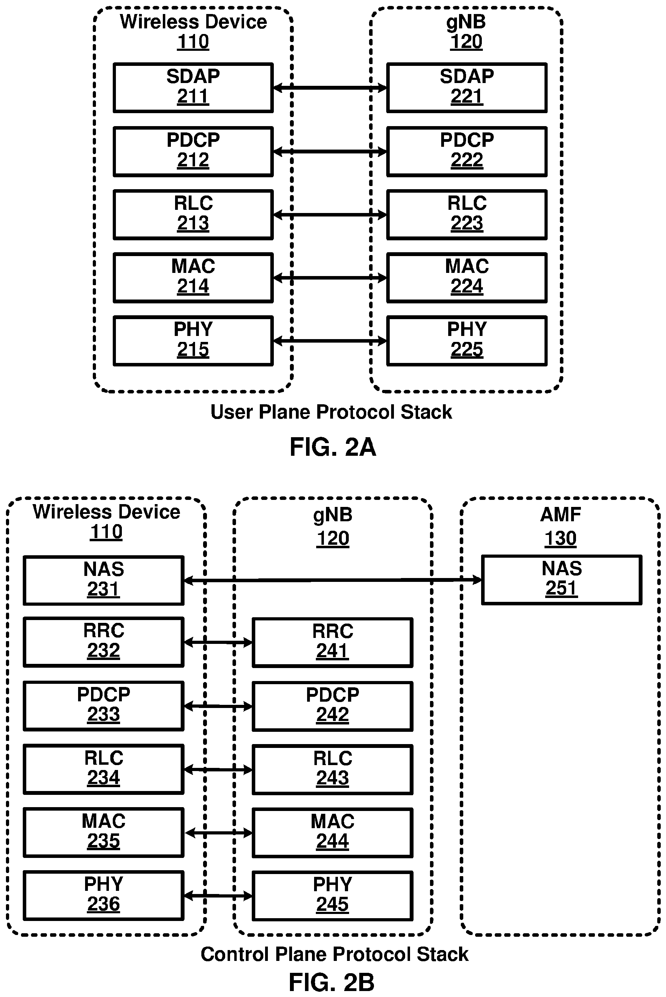

FIG. 2A is an example user plane protocol stack, where Service Data Adaptation Protocol (SDAP) (*e.g.* 211 and 221), Packet Data Convergence Protocol (PDCP) (*e.g*. 212 and 222), Radio Link Control (RLC) (*e.g.* 213 and 223) and Media Access Control (MAC) (*e.g.* 214 and 224) sublayers and Physical (PHY) (*e.g.* 215 and 225) layer may be terminated in wireless device (*e.g.* 110) and gNB (*e.g.* 120) on the network side. In an example, a PHY layer provides transport services to higher layers (e.g. MAC, RRC, etc.). In an example, services and functions of a MAC sublayer may comprise mapping between logical channels and transport channels, multiplexing/demultiplexing of MAC Service Data Units (SDUs) belonging to one or different logical channels into/from Transport Blocks (TBs) delivered to/from the PHY layer, scheduling information reporting, error correction through Hybrid Automatic Repeat request (HARQ) (*e.g.* one HARQ entity per carrier in case of Carrier Aggregation (CA)), priority handling between UEs by means of dynamic scheduling, priority handling between logical channels of one UE by means of logical channel prioritization, and/or padding. A MAC entity may support one or multiple numerologies and/or transmission timings. In an example, mapping restrictions in a logical channel prioritization may control which numerology and/or transmission timing a logical channel may use. In an example, an RLC sublayer may supports transparent mode (TM), unacknowledged mode (UM) and acknowledged mode (AM) transmission modes. The RLC configuration may be per logical channel with no dependency on numerologies and/or Transmission Time Interval (TTI) durations. In an example, Automatic Repeat Request (ARQ) may operate on any of the numerologies and/or TTI durations the logical channel is configured with. In an example, services and functions of the PDCP layer for the user plane may comprise sequence numbering, header compression and decompression, transfer of user data, reordering and duplicate detection, PDCP PDU routing (*e.g.* in case of split bearers), retransmission of PDCP SDUs, ciphering, deciphering and integrity protection, PDCP SDU discard, PDCP re-establishment and data recovery for RLC AM, and/or duplication of PDCP PDUs. In an example, services and functions of SDAP may comprise mapping between a QoS flow and a data radio bearer. In an example, services and functions of SDAP may comprise mapping Quality of Service Indicator (QFI) in DL and UL packets. In an example, a protocol entity of SDAP may be configured for an individual PDU session.

FIG. 2B is an example control plane protocol stack where PDCP (*e.g.* 233 and 242), RLC (*e.g.* 234 and 243) and MAC (*e.g.* 235 and 244) sublayers and PHY (*e.g.* 236 and 245) layer may be terminated in wireless device (*e.g.* 110) and gNB (*e.g.* 120) on a network side and perform service and functions described above. In an example, RRC (*e.g.* 232 and 241) may be terminated in a wireless device and a gNB on a network side. In an example, services and functions of RRC may comprise broadcast of system information related to AS and NAS, paging initiated by 5GC or RAN, establishment, maintenance and release of an RRC connection between the UE and RAN, security functions including key management, establishment, configuration, maintenance and release of Signaling Radio Bearers (SRBs) and Data Radio Bearers (DRBs), mobility functions, QoS management functions, UE measurement reporting and control of the reporting, detection of and recovery from radio link failure, and/or NAS message transfer to/from NAS from/to a UE. In an example, NAS control protocol (*e.g.* 231 and 251) may be terminated in the wireless device and AMF (*e.g.* 130) on a network side and may perform functions such as authentication, mobility management between a UE and an AMF for 3GPP access and non-3GPP access, and session management between a UE and a SMF for 3GPP access and non-3GPP access.

In an example, a base station may configure a plurality of logical channels for a wireless device. A logical channel in the plurality of logical channels may correspond to a radio bearer and the radio bearer may be associated with a QoS requirement. In an example, a base station may configure a logical channel to be mapped to one or more TTIs/numerologies in a plurality of TTIs/numerologies. The wireless device may receive a Downlink Control Information (DCI) via Physical Downlink Control CHannel (PDCCH) indicating an uplink grant. In an example, the uplink grant may be for a first TTI/numerology and may indicate uplink resources for transmission of a transport block. The base station may configure each logical channel in the plurality of logical channels with one or more parameters to be used by a logical channel prioritization procedure at the MAC layer of the wireless device. The one or more parameters may comprise priority, prioritized bit rate, etc. A logical channel in the plurality of logical channels may correspond to one or more buffers comprising data associated with the logical channel. The logical channel prioritization procedure may allocate the uplink resources to one or more first logical channels in the plurality of logical channels and/or one or more MAC Control Elements (CEs). The one or more first logical channels may be mapped to the first TTI/numerology. The MAC layer at the wireless device may multiplex one or more MAC CEs and/or one or more MAC SDUs (*e.g.,* logical channel) in a MAC PDU (*e.g.,* transport block). In an example, the MAC PDU may comprise a MAC header comprising a plurality of MAC sub-headers. A MAC sub-header in the plurality of MAC sub-headers may correspond to a MAC CE or a MAC SDU (logical channel) in the one or more MAC CEs and/or one or more MAC SDUs. In an example, a MAC CE or a logical channel may be configured with a Logical Channel IDentifier (LCID). In an example, LCID for a logical channel or a MAC CE may be fixed/pre-configured. In an example, LCID for a logical channel or MAC CE may be configured for the wireless device by the base station. The MAC sub-header corresponding to a MAC CE or a MAC SDU may comprise LCID associated with the MAC CE or the MAC SDU.

In an example, a base station may activate and/or deactivate and/or impact one or more processes (*e.g.,* set values of one or more parameters of the one or more processes or start and/or stop one or more timers of the one or more processes) at the wireless device by employing one or more MAC commands. The one or more MAC commands may comprise one or more MAC control elements. In an example, the one or more processes may comprise activation and/or deactivation of PDCP packet duplication for one or more radio bearers. The base station may transmit a MAC CE comprising one or more fields, the values of the fields indicating activation and/or deactivation of PDCP duplication for the one or more radio bearers. In an example, the one or more processes may comprise Channel State Information (CSI) transmission of on one or more cells. The base station may transmit one or more MAC CEs indicating activation and/or deactivation of the CSI transmission on the one or more cells. In an example, the one or more processes may comprise activation or deactivation of one or more secondary cells. In an example, the base station may transmit a MAC CE indicating activation or deactivation of one or more secondary cells. In an example, the base station may transmit one or more MAC CEs indicating starting and/or stopping one or more Discontinuous Reception (DRX) timers at the wireless device. In an example, the base station may transmit one or more MAC CEs indicating one or more timing advance values for one or more Timing Advance Groups (TAGs).

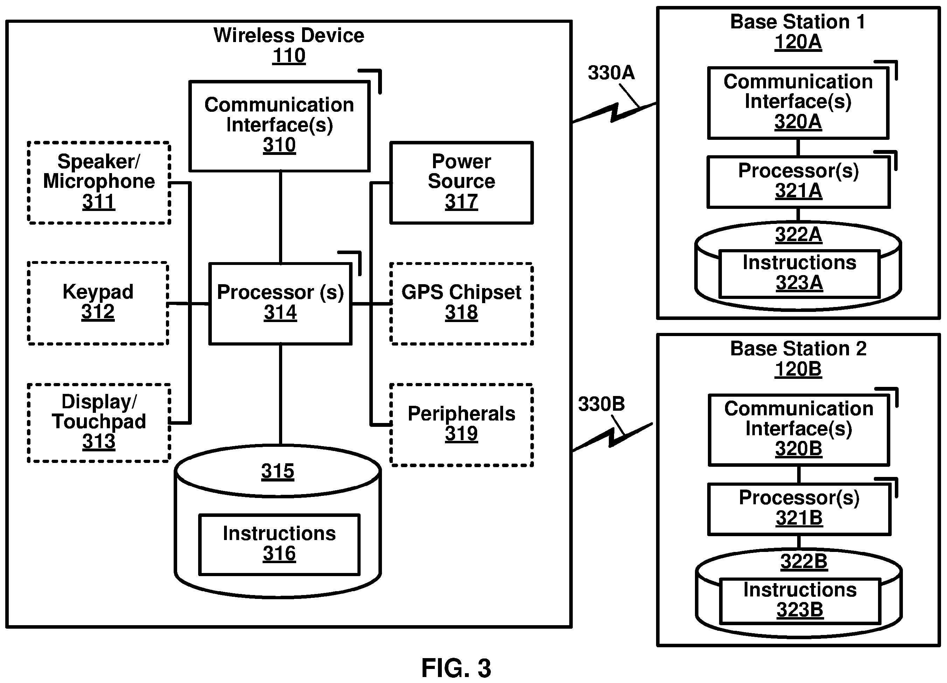

FIG. 3 is a block diagram of base stations (base station 1, 120A, and base station 2, 120B) and a wireless device 110. A wireless device may be called a UE. A base station may be called a NB, eNB, gNB, and/or ng-eNB. In an example, a wireless device and/or a base station may act as a relay node. The base station 1, 120A, may comprise at least one communication interface 320A (*e.g.* a wireless modem, an antenna, a wired modem, and/or the like), at least one processor 321A, and at least one set of program code instructions 323A stored in non-transitory memory 322A and executable by the at least one processor 321A. The base station 2, 120B, may comprise at least one communication interface 320B, at least one processor 321B, and at least one set of program code instructions 323B stored in non-transitory memory 322B and executable by the at least one processor 321B.

A base station may comprise many sectors for example: 1, 2, 3, 4, or 6 sectors. A base station may comprise many cells, for example, ranging from 1 to 50 cells or more. A cell may be categorized, for example, as a primary cell or secondary cell. At Radio Resource Control (RRC) connection establishment/re-establishment/handover, one serving cell may provide the NAS (non-access stratum) mobility information (*e*.*g*. Tracking Area Identifier (TAI)). At RRC connection re-establishment/handover, one serving cell may provide the security input. This cell may be referred to as the Primary Cell (PCell). In the downlink, a carrier corresponding to the PCell may be a DL Primary Component Carrier (PCC), while in the uplink, a carrier may be an UL PCC. Depending on wireless device capabilities, Secondary Cells (SCells) may be configured to form together with a PCell a set of serving cells. In a downlink, a carrier corresponding to an SCell may be a downlink secondary component carrier (DL SCC), while in an uplink, a carrier may be an uplink secondary component carrier (UL SCC). An SCell may or may not have an uplink carrier.

A cell, comprising a downlink carrier and optionally an uplink carrier, may be assigned a physical cell ID and a cell index. A carrier (downlink or uplink) may belong to one cell. The cell ID or cell index may also identify the downlink carrier or uplink carrier of the cell (depending on the context it is used). In the disclosure, a cell ID may be equally referred to as a carrier ID, and a cell index may be referred to a carrier index. In an implementation, a physical cell ID or a cell index may be assigned to a cell. A cell ID may be determined using a synchronization signal transmitted on a downlink carrier. A cell index may be determined using RRC messages. For example, when the disclosure refers to a first physical cell ID for a first downlink carrier, the disclosure may mean the first physical cell ID is for a cell comprising the first downlink carrier. The same concept may apply to, for example, carrier activation. When the disclosure indicates that a first carrier is activated, the specification may equally mean that a cell comprising the first carrier is activated.

A base station may transmit to a wireless device one or more messages (*e*.*g*. RRC messages) comprising a plurality of configuration parameters for one or more cells. One or more cells may comprise at least one primary cell and at least one secondary cell. In an example, an RRC message may be broadcasted or unicasted to the wireless device. In an example, configuration parameters may comprise common parameters and dedicated parameters.

Services and/or functions of an RRC sublayer may comprise at least one of: broadcast of system information related to AS and NAS; paging initiated by 5GC and/or NG-RAN; establishment, maintenance, and/or release of an RRC connection between a wireless device and NG-RAN, which may comprise at least one of addition, modification and release of carrier aggregation; or addition, modification, and/or release of dual connectivity in NR or between E-UTRA and NR. Services and/or functions of an RRC sublayer may further comprise at least one of security functions comprising key management; establishment, configuration, maintenance, and/or release of Signaling Radio Bearers (SRBs) and/or Data Radio Bearers (DRBs); mobility functions which may comprise at least one of a handover (*e.g.* intra NR mobility or inter-RAT mobility) and a context transfer; or a wireless device cell selection and reselection and control of cell selection and reselection. Services and/or functions of an RRC sublayer may further comprise at least one of QoS management functions; a wireless device measurement configuration/reporting; detection of and/or recovery from radio link failure; or NAS message transfer to/from a core network entity (*e.g.* AMF, Mobility Management Entity (MME)) from/to the wireless device.

An RRC sublayer may support an RRC_Idle state, an RRC_Inactive state and/or an RRC_Connected state for a wireless device. In an RRC_Idle state, a wireless device may perform at least one of: Public Land Mobile Network (PLMN) selection; receiving broadcasted system information; cell selection/re-selection; monitoring/receiving a paging for mobile terminated data initiated by 5GC; paging for mobile terminated data area managed by 5GC; or DRX for CN paging configured via NAS. In an RRC_Inactive state, a wireless device may perform at least one of: receiving broadcasted system information; cell selection/re-selection; monitoring/receiving a RAN/CN paging initiated by NG-RAN/5GC; RAN-based notification area (RNA) managed by NG- RAN; or DRX for RAN/CN paging configured by NG-RAN/NAS. In an RRC_Idle state of a wireless device, a base station (*e*.*g*. NG-RAN) may keep a 5GC-NG-RAN connection (both C/U-planes) for the wireless device; and/or store a UE AS context for the wireless device. In an RRC_Connected state of a wireless device, a base station (*e*.*g*. NG-RAN) may perform at least one of: establishment of 5GC-NG-RAN connection (both C/U-planes) for the wireless device; storing a UE AS context for the wireless device; transmit/receive of unicast data to/from the wireless device; or network-controlled mobility based on measurement results received from the wireless device. In an RRC_Connected state of a wireless device, an NG-RAN may know a cell that the wireless device belongs to.

System information (SI) may be divided into minimum SI and other SI. The minimum SI may be periodically broadcast. The minimum SI may comprise basic information required for initial access and information for acquiring any other SI broadcast periodically or provisioned on-demand, i.e. scheduling information. The other SI may either be broadcast, or be provisioned in a dedicated manner, either triggered by a network or upon request from a wireless device. A minimum SI may be transmitted via two different downlink channels using different messages (*e.g. MasterInformationBlock* and *SystemInformationBlockType1*)*.* Another SI may be transmitted via *SystemInformationBlockType2.* For a wireless device in an RRC_Connected state, dedicated RRC signalling may be employed for the request and delivery of the other SI. For the wireless device in the RRC_Idle state and/or the RRC_Inactive state, the request may trigger a random-access procedure.

A wireless device may report its radio access capability information which may be static. A base station may request what capabilities for a wireless device to report based on band information. When allowed by a network, a temporary capability restriction request may be sent by the wireless device to signal the limited availability of some capabilities (*e*.*g*. due to hardware sharing, interference or overheating) to the base station. The base station may confirm or reject the request. The temporary capability restriction may be transparent to 5GC (*e.g.,* only static capabilities may be stored in 5GC).

When CA is configured, a wireless device may have an RRC connection with a network. At RRC connection establishment/re-establishment/handover procedure, one serving cell may provide NAS mobility information, and at RRC connection re-establishment/handover, one serving cell may provide a security input. This cell may be referred to as the PCell. Depending on the capabilities of the wireless device, SCells may be configured to form together with the PCell a set of serving cells. The configured set of serving cells for the wireless device may comprise one PCell and one or more SCells.

The reconfiguration, addition and removal of SCells may be performed by RRC. At intra-NR handover, RRC may also add, remove, or reconfigure SCells for usage with the target PCell. When adding a new SCell, dedicated RRC signalling may be employed to send all required system information of the SCell i.e. while in connected mode, wireless devices may not need to acquire broadcasted system information directly from the SCells.

The purpose of an RRC connection reconfiguration procedure may be to modify an RRC connection, (*e*.*g*. to establish, modify and/or release RBs, to perform handover, to setup, modify, and/or release measurements, to add, modify, and/or release SCells and cell groups). As part of the RRC connection reconfiguration procedure, NAS dedicated information may be transferred from the network to the wireless device. The *RRCConnectionReconfiguration* message may be a command to modify an RRC connection. It may convey information for measurement configuration, mobility control, radio resource configuration (*e*.*g*. RBs, MAC main configuration and physical channel configuration) comprising any associated dedicated NAS information and security configuration. If the received RRC Connection Reconfiguration message includes the *sCellToReleaseList,* the wireless device may perform an SCell release. If the received RRC Connection Reconfiguration message includes the *sCellToAddModList,* the wireless device may perform SCell additions or modification.

An RRC connection establishment (or reestablishment, resume) procedure may be to establish (or reestablish, resume) an RRC connection. An RRC connection establishment procedure may comprise SRB1 establishment. The RRC connection establishment procedure may be used to transfer the initial NAS dedicated information/ message from a wireless device to E-UTRAN. The *RRCConnectionReestablishment* message may be used to reestablish SRB1.

A measurement report procedure may be to transfer measurement results from a wireless device to NG-RAN. The wireless device may initiate a measurement report procedure after successful security activation. A measurement report message may be employed to transmit measurement results.

The wireless device 110 may comprise at least one communication interface 310 (*e.g.* a wireless modem, an antenna, and/or the like), at least one processor 314, and at least one set of program code instructions 316 stored in non-transitory memory 315 and executable by the at least one processor 314. The wireless device 110 may further comprise at least one of at least one speaker/microphone 311, at least one keypad 312, at least one display/touchpad 313, at least one power source 317, at least one global positioning system (GPS) chipset 318, and other peripherals 319.

The processor 314 of the wireless device 110, the processor 321A of the base station 1 120A, and/or the processor 321B of the base station 2 120B may comprise at least one of a general-purpose processor, a digital signal processor (DSP), a controller, a microcontroller, an application specific integrated circuit (ASIC), a field programmable gate array (FPGA) and/or other programmable logic device, discrete gate and/or transistor logic, discrete hardware components, and the like. The processor 314 of the wireless device 110, the processor 321A in base station 1 120A, and/or the processor 321B in base station 2 120B may perform at least one of signal coding/processing, data processing, power control, input/output processing, and/or any other functionality that may enable the wireless device 110, the base station 1 120A and/or the base station 2 120B to operate in a wireless environment.

The processor 314 of the wireless device 110 may be connected to the speaker/microphone 311, the keypad 312, and/or the display/touchpad 313. The processor 314 may receive user input data from and/or provide user output data to the speaker/microphone 311, the keypad 312, and/or the display/touchpad 313. The processor 314 in the wireless device 110 may receive power from the power source 317 and/or may be configured to distribute the power to the other components in the wireless device 110. The power source 317 may comprise at least one of one or more dry cell batteries, solar cells, fuel cells, and the like. The processor 314 may be connected to the GPS chipset 318. The GPS chipset 318 may be configured to provide geographic location information of the wireless device 110.

The processor 314 of the wireless device 110 may further be connected to other peripherals 319, which may comprise one or more software and/or hardware modules that provide additional features and/or functionalities. For example, the peripherals 319 may comprise at least one of an accelerometer, a satellite transceiver, a digital camera, a universal serial bus (USB) port, a hands-free headset, a frequency modulated (FM) radio unit, a media player, an Internet browser, and the like.

The communication interface 320A of the base station 1, 120A, and/or the communication interface 320B of the base station 2, 120B, may be configured to communicate with the communication interface 310 of the wireless device 110 via a wireless link 330A and/or a wireless link 330B respectively. In an example, the communication interface 320A of the base station 1, 120A, may communicate with the communication interface 320B of the base station 2 and other RAN and core network nodes.

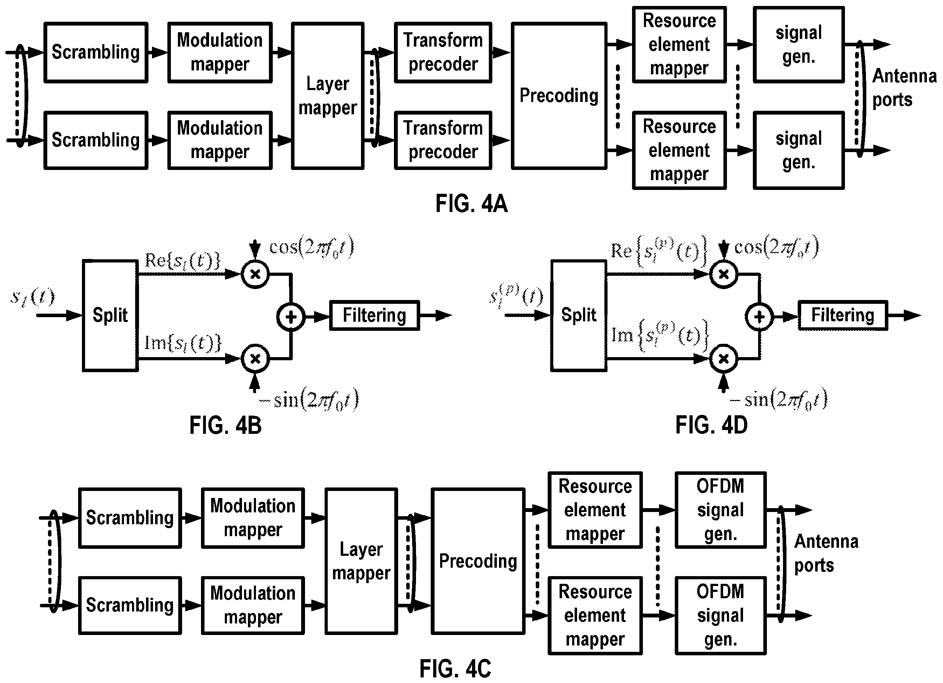

The wireless link 330A and/or the wireless link 330B may comprise at least one of a bi-directional link and/or a directional link. The communication interface 310 of the wireless device 110 may be configured to communicate with the communication interface 320A of the base station 1 120A and/or with the communication interface 320B of the base station 2 120B. The base station 1 120A and the wireless device 110 and/or the base station 2 120B and the wireless device 110 may be configured to send and receive transport blocks via the wireless link 330A and/or via the wireless link 330B, respectively. The wireless link 330A and/or the wireless link 330B may employ at least one frequency carrier. According to some of various aspects of embodiments, transceiver(s) may be employed. A transceiver may be a device that comprises both a transmitter and a receiver. Transceivers may be employed in devices such as wireless devices, base stations, relay nodes, and/or the like. Example embodiments for radio technology implemented in the communication interface 310, 320A, 320B and the wireless link 330A, 330B are illustrated in FIG. 4A, FIG. 4B, FIG. 4C, FIG. 4D, FIG. 6, FIG. 7A, FIG. 7B, FIG. 8, and associated text.

In an example, other nodes in a wireless network (*e*.*g*. AMF, UPF, SMF, etc.) may comprise one or more communication interfaces, one or more processors, and memory storing instructions.

A node (*e.g*. wireless device, base station, AMF, SMF, UPF, servers, switches, antennas, and/or the like) may comprise one or more processors, and memory storing instructions that when executed by the one or more processors causes the node to perform certain processes and/or functions. Example embodiments may enable operation of single-carrier and/or multi-carrier communications. Other example embodiments may comprise a non-transitory tangible computer readable media comprising instructions executable by one or more processors to cause operation of single-carrier and/or multi-carrier communications. Yet other example embodiments may comprise an article of manufacture that comprises a non-transitory tangible computer readable machine-accessible medium having instructions encoded thereon for enabling programmable hardware to cause a node to enable operation of single-carrier and/or multi-carrier communications. The node may include processors, memory, interfaces, and/or the like.

An interface may comprise at least one of a hardware interface, a firmware interface, a software interface, and/or a combination thereof. The hardware interface may comprise connectors, wires, electronic devices such as drivers, amplifiers, and/or the like. The software interface may comprise code stored in a memory device to implement protocol(s), protocol layers, communication drivers, device drivers, combinations thereof, and/or the like. The firmware interface may comprise a combination of embedded hardware and code stored in and/or in communication with a memory device to implement connections, electronic device operations, protocol(s), protocol layers, communication drivers, device drivers, hardware operations, combinations thereof, and/or the like.

FIG. 4A, FIG. 4B, FIG. 4C and FIG. 4D are example diagrams for uplink and downlink signal transmission as per an aspect of an embodiment of the present disclosure. FIG. 4A shows an example uplink transmitter for at least one physical channel. A baseband signal representing a physical uplink shared channel may perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA) or CP-OFDM signal for an antenna port; and/or the like. In an example, when transform precoding is enabled, a SC-FDMA signal for uplink transmission may be generated. In an example, when transform precoding is not enabled, an CP-OFDM signal for uplink transmission may be generated by FIG. 4A. These functions are illustrated as examples and it is anticipated that other mechanisms may be implemented in various embodiments.

An example structure for modulation and up-conversion to the carrier frequency of the complex-valued SC-FDMA or CP-OFDM baseband signal for an antenna port and/or the complex-valued Physical Random Access CHannel (PRACH) baseband signal is shown in FIG. 4B. Filtering may be employed prior to transmission.

An example structure for downlink transmissions is shown in FIG. 4C. The baseband signal representing a downlink physical channel may perform one or more functions. The one or more functions may comprise: scrambling of coded bits in a codeword to be transmitted on a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are illustrated as examples and it is anticipated that other mechanisms may be implemented in various embodiments.

In an example, a gNB may transmit a first symbol and a second symbol on an antenna port, to a wireless device. The wireless device may infer the channel (*e.g*., fading gain, multipath delay, etc.) for conveying the second symbol on the antenna port, from the channel for conveying the first symbol on the antenna port. In an example, a first antenna port and a second antenna port may be quasi co-located if one or more large-scale properties of the channel over which a first symbol on the first antenna port is conveyed may be inferred from the channel over which a second symbol on a second antenna port is conveyed. The one or more large-scale properties may comprise at least one of: delay spread; doppler spread; doppler shift; average gain; average delay; and/or spatial Receiving (Rx) parameters.

An example modulation and up-conversion to the carrier frequency of the complex-valued OFDM baseband signal for an antenna port is shown in FIG. 4D. Filtering may be employed prior to transmission.

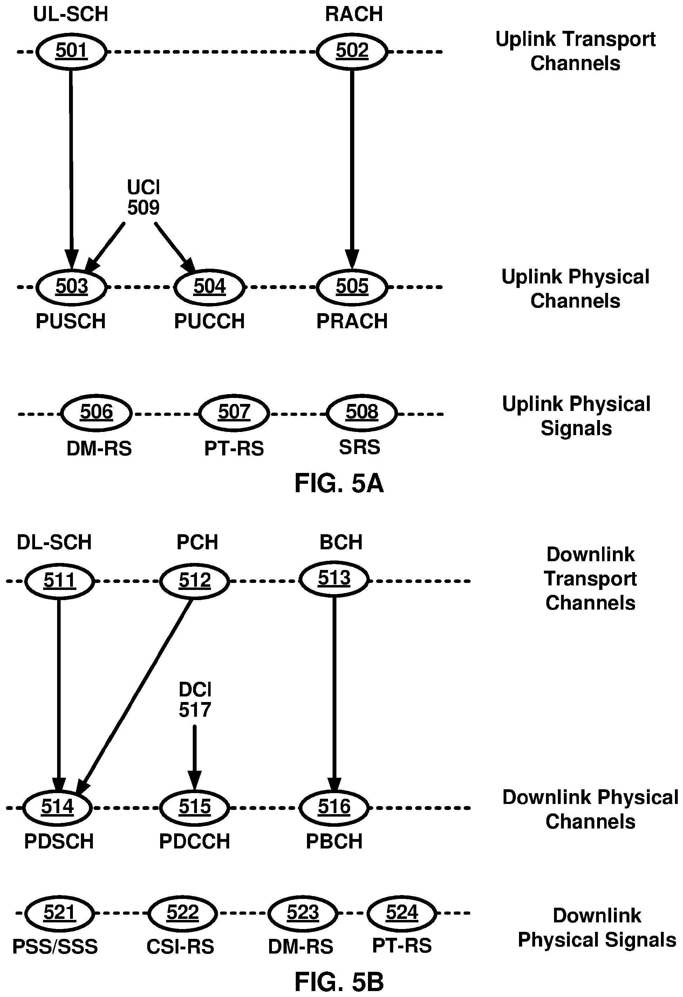

FIG. 5A is a diagram of an example uplink channel mapping and example uplink physical signals. FIG. 5B is a diagram of an example downlink channel mapping and a downlink physical signals. In an example, a physical layer may provide one or more information transfer services to a MAC and/or one or more higher layers. For example, the physical layer may provide the one or more information transfer services to the MAC via one or more transport channels. An information transfer service may indicate how and with what characteristics data are transferred over the radio interface.

In an example embodiment, a radio network may comprise one or more downlink and/or uplink transport channels. For example, a diagram in FIG. 5A shows example uplink transport channels comprising Uplink-Shared CHannel (UL-SCH) 501 and Random Access CHannel (RACH) 502. A diagram in FIG. 5B shows example downlink transport channels comprising Downlink-Shared CHannel (DL-SCH) 511, Paging CHannel (PCH) 512, and Broadcast CHannel (BCH) 513. A transport channel may be mapped to one or more corresponding physical channels. For example, UL-SCH 501 may be mapped to Physical Uplink Shared CHannel (PUSCH) 503. RACH 502 may be mapped to PRACH 505. DL-SCH 511 and PCH 512 may be mapped to Physical Downlink Shared CHannel (PDSCH) 514. BCH 513 may be mapped to Physical Broadcast CHannel (PBCH) 516.

There may be one or more physical channels without a corresponding transport channel. The one or more physical channels may be employed for Uplink Control Information (UCI) 509 and/or Downlink Control Information (DCI) 517. For example, Physical Uplink Control CHannel (PUCCH) 504 may carry UCI 509 from a UE to a base station. For example, Physical Downlink Control CHannel (PDCCH) 515 may carry DCI 517 from a base station to a UE. NR may support UCI 509 multiplexing in PUSCH 503 when UCI 509 and PUSCH 503 transmissions may coincide in a slot at least in part. The UCI 509 may comprise at least one of CSI, Acknowledgement (ACK)/Negative Acknowledgement (NACK), and/or scheduling request. The DCI 517 on PDCCH 515 may indicate at least one of following: one or more downlink assignments and/or one or more uplink scheduling grants

In uplink, a UE may transmit one or more Reference Signals (RSs) to a base station. For example, the one or more RSs may be at least one of Demodulation-RS (DM-RS) 506, Phase Tracking-RS (PT-RS) 507, and/or Sounding RS (SRS) 508. In downlink, a base station may transmit (*e.g.,* unicast, multicast, and/or broadcast) one or more RSs to a UE. For example, the one or more RSs may be at least one of Primary Synchronization Signal (PSS)/Secondary Synchronization Signal (SSS) 521, CSI-RS 522, DM-RS 523, and/or PT-RS 524.

In an example, a UE may transmit one or more uplink DM-RSs 506 to a base station for channel estimation, for example, for coherent demodulation of one or more uplink physical channels (*e.g.,* PUSCH 503 and/or PUCCH 504). For example, a UE may transmit a base station at least one uplink DM-RS 506 with PUSCH 503 and/or PUCCH 504, wherein the at least one uplink DM-RS 506 may be spanning a same frequency range as a corresponding physical channel. In an example, a base station may configure a UE with one or more uplink DM-RS configurations. At least one DM-RS configuration may support a front-loaded DM-RS pattern. A front-loaded DM-RS may be mapped over one or more OFDM symbols (*e.g.,* 1 or 2 adjacent OFDM symbols). One or more additional uplink DM-RS may be configured to transmit at one or more symbols of a PUSCH and/or PUCCH. A base station may semi-statistically configure a UE with a maximum number of front-loaded DM-RS symbols for PUSCH and/or PUCCH. For example, a UE may schedule a single-symbol DM-RS and/or double symbol DM-RS based on a maximum number of front-loaded DM-RS symbols, wherein a base station may configure the UE with one or more additional uplink DM-RS for PUSCH and/or PUCCH. A new radio network may support, *e.g.,* at least for CP-OFDM, a common DM-RS structure for DL and UL, wherein a DM-RS location, DM-RS pattern, and/or scrambling sequence may be same or different.

In an example, whether uplink PT-RS 507 is present or not may depend on a RRC configuration. For example, a presence of uplink PT-RS may be UE-specifically configured. For example, a presence and/or a pattern of uplink PT-RS 507 in a scheduled resource may be UE-specifically configured by a combination of RRC signaling and/or association with one or more parameters employed for other purposes (*e.g.,* Modulation and Coding Scheme (MCS)) which may be indicated by DCI. When configured, a dynamic presence of uplink PT-RS 507 may be associated with one or more DCI parameters comprising at least MCS. A radio network may support plurality of uplink PT-RS densities defined in time/frequency domain. When present, a frequency domain density may be associated with at least one configuration of a scheduled bandwidth. A UE may assume a same precoding for a DMRS port and a PT-RS port. A number of PT-RS ports may be fewer than a number of DM-RS ports in a scheduled resource. For example, uplink PT-RS 507 may be confined in the scheduled time/frequency duration for a UE.

In an example, a UE may transmit SRS 508 to a base station for channel state estimation to support uplink channel dependent scheduling and/or link adaptation. For example, SRS 508 transmitted by a UE may allow for a base station to estimate an uplink channel state at one or more different frequencies. A base station scheduler may employ an uplink channel state to assign one or more resource blocks of good quality for an uplink PUSCH transmission from a UE. A base station may semi-statistically configure a UE with one or more SRS resource sets. For an SRS resource set, a base station may configure a UE with one or more SRS resources. An SRS resource set applicability may be configured by a higher layer (*e.g.,* RRC) parameter. For example, when a higher layer parameter indicates beam management, a SRS resource in each of one or more SRS resource sets may be transmitted at a time instant. A UE may transmit one or more SRS resources in different SRS resource sets simultaneously. A new radio network may support aperiodic, periodic and/or semi-persistent SRS transmissions. A UE may transmit SRS resources based on one or more trigger types, wherein the one or more trigger types may comprise higher layer signaling (*e.g.,* RRC) and/or one or more DCI formats (*e.g.,* at least one DCI format may be employed for a UE to select at least one of one or more configured SRS resource sets. An SRS trigger type 0 may refer to an SRS triggered based on a higher layer signaling. An SRS trigger type 1 may refer to an SRS triggered based on one or more DCI formats. In an example, when PUSCH 503 and SRS 508 are transmitted in a same slot, a UE may be configured to transmit SRS 508 after a transmission of PUSCH 503 and corresponding uplink DM-RS 506.

In an example, a base station may semi-statistically configure a UE with one or more SRS configuration parameters indicating at least one of following: a SRS resource configuration identifier, a number of SRS ports, time domain behavior of SRS resource configuration (*e.g.,* an indication of periodic, semi-persistent, or aperiodic SRS), slot (mini-slot, and/or subframe) level periodicity and/or offset for a periodic and/or aperiodic SRS resource, a number of OFDM symbols in a SRS resource, starting OFDM symbol of a SRS resource, a SRS bandwidth, a frequency hopping bandwidth, a cyclic shift, and/or a SRS sequence ID.

In an example, in a time domain, an SS/PBCH block may comprise one or more OFDM symbols (*e.g.,* 4 OFDM symbols numbered in increasing order from 0 to 3) within the SS/PBCH block. An SS/PBCH block may comprise PSS/SSS 521 and PBCH 516. In an example, in the frequency domain, an SS/PBCH block may comprise one or more contiguous subcarriers (*e.g.,* 240 contiguous subcarriers with the subcarriers numbered in increasing order from 0 to 239) within the SS/PBCH block. For example, a PSS/SSS 521 may occupy 1 OFDM symbol and 127 subcarriers. For example, PBCH 516 may span across 3 OFDM symbols and 240 subcarriers. A UE may assume that one or more SS/PBCH blocks transmitted with a same block index may be quasi co-located, *e.g.,* with respect to Doppler spread, Doppler shift, average gain, average delay, and spatial Rx parameters. A UE may not assume quasi co-location for other SS/PBCH block transmissions. A periodicity of an SS/PBCH block may be configured by a radio network (*e.g.,* by an RRC signaling) and one or more time locations where the SS/PBCH block may be sent may be determined by sub-carrier spacing. In an example, a UE may assume a band-specific sub-carrier spacing for an SS/PBCH block unless a radio network has configured a UE to assume a different sub-carrier spacing.

In an example, downlink CSI-RS 522 may be employed for a UE to acquire channel state information. A radio network may support periodic, aperiodic, and/or semi-persistent transmission of downlink CSI-RS 522. For example, a base station may semi-statistically configure and/or reconfigure a UE with periodic transmission of downlink CSI-RS 522. A configured CSI-RS resources may be activated and/or deactivated. For semi-persistent transmission, an activation and/or deactivation of CSI-RS resource may be triggered dynamically. In an example, CSI-RS configuration may comprise one or more parameters indicating at least a number of antenna ports. For example, a base station may configure a UE with 32 ports. A base station may semi-statistically configure a UE with one or more CSI-RS resource sets. One or more CSI-RS resources may be allocated from one or more CSI-RS resource sets to one or more UEs. For example, a base station may semi-statistically configure one or more parameters indicating CSI RS resource mapping, for example, time-domain location of one or more CSI-RS resources, a bandwidth of a CSI-RS resource, and/or a periodicity. In an example, a UE may be configured to employ a same OFDM symbols for downlink CSI-RS 522 and Control Resource Set (CORESET) when the downlink CSI-RS 522 and CORESET are spatially quasi co-located and resource elements associated with the downlink CSI-RS 522 are the outside of PRBs configured for CORESET. In an example, a UE may be configured to employ a same OFDM symbols for downlink CSI-RS 522 and SSB/PBCH when the downlink CSI-RS 522 and SSB/PBCH are spatially quasi co-located and resource elements associated with the downlink CSI-RS 522 are the outside of PRBs configured for SSB/PBCH.

In an example, a UE may transmit one or more downlink DM-RSs 523 to a base station for channel estimation, for example, for coherent demodulation of one or more downlink physical channels (*e.g*., PDSCH 514). For example, a radio network may support one or more variable and/or configurable DM-RS patterns for data demodulation. At least one downlink DM-RS configuration may support a front-loaded DM-RS pattern. A front-loaded DM-RS may be mapped over one or more OFDM symbols (*e.g.,* 1 or 2 adjacent OFDM symbols). A base station may semi-statistically configure a UE with a maximum number of front-loaded DM-RS symbols for PDSCH 514. For example, a DM-RS configuration may support one or more DM-RS ports. For example, for single user-MIMO, a DM-RS configuration may support at least 8 orthogonal downlink DM-RS ports. For example, for multiuser-MIMO, a DM-RS configuration may support 12 orthogonal downlink DM-RS ports. A radio network may support, *e.g.,* at least for CP-OFDM, a common DM-RS structure for DL and UL, wherein a DM-RS location, DM-RS pattern, and/or scrambling sequence may be same or different.

In an example, whether downlink PT-RS 524 is present or not may depend on a RRC configuration. For example, a presence of downlink PT-RS 524 may be UE-specifically configured. For example, a presence and/or a pattern of downlink PT-RS 524 in a scheduled resource may be UE-specifically configured by a combination of RRC signaling and/or association with one or more parameters employed for other purposes (*e.g.,* MCS) which may be indicated by DCI. When configured, a dynamic presence of downlink PT-RS 524 may be associated with one or more DCI parameters comprising at least MCS. A radio network may support plurality of PT-RS densities defined in time/frequency domain. When present, a frequency domain density may be associated with at least one configuration of a scheduled bandwidth. A UE may assume a same precoding for a DMRS port and a PT-RS port. A number of PT-RS ports may be fewer than a number of DM-RS ports in a scheduled resource. For example, downlink PT-RS 524 may be confined in the scheduled time/frequency duration for a UE.

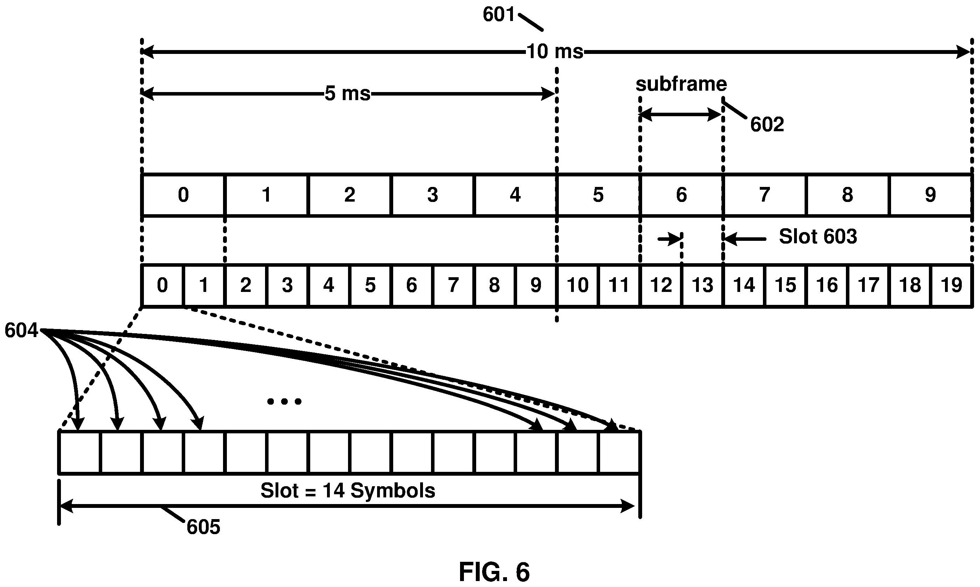

FIG. 6 is a diagram depicting an example transmission time and reception time for a carrier as per an aspect of an embodiment of the present disclosure. A multicarrier OFDM communication system may include one or more carriers, for example, ranging from 1 to 32 carriers, in case of carrier aggregation, or ranging from 1 to 64 carriers, in case of dual connectivity. Different radio frame structures may be supported (*e.g.,* for FDD and for TDD duplex mechanisms). FIG. 6 shows an example frame timing. Downlink and uplink transmissions may be organized into radio frames 601. In this example, radio frame duration is 10 ms. In this example, a 10 ms radio frame 601 may be divided into ten equally sized subframes 602 with 1 ms duration. Subframe(s) may comprise one or more slots (*e.g.* slots 603 and 605) depending on subcarrier spacing and/or CP length. For example, a subframe with 15 kHz, 30 kHz, 60 kHz, 120 kHz, 240 kHz and 480 kHz subcarrier spacing may comprise one, two, four, eight, sixteen and thirty-two slots, respectively. In FIG. 6, a subframe may be divided into two equally sized slots 603 with 0.5 ms duration. For example, 10 subframes may be available for downlink transmission and 10 subframes may be available for uplink transmissions in a 10 ms interval. Uplink and downlink transmissions may be separated in the frequency domain. Slot(s) may include a plurality of OFDM symbols 604. The number of OFDM symbols 604 in a slot 605 may depend on the cyclic prefix length. For example, a slot may be 14 OFDM symbols for the same subcarrier spacing of up to 480 kHz with normal CP. A slot may be 12 OFDM symbols for the same subcarrier spacing of 60kHz with extended CP. A slot may contain downlink, uplink, or a downlink part and an uplink part and/or alike.

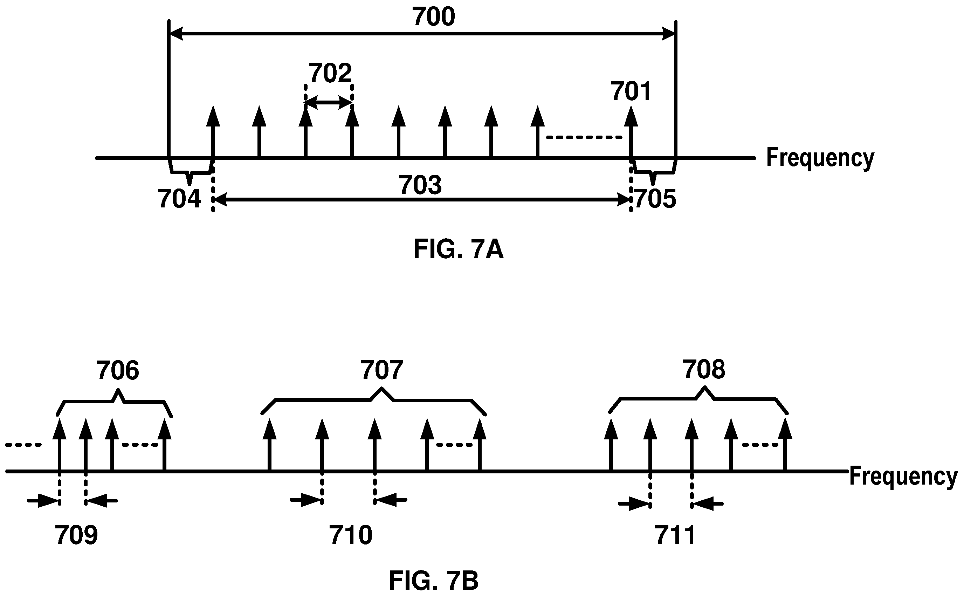

FIG. 7A is a diagram depicting example sets of OFDM subcarriers as per an aspect of an embodiment of the present disclosure. In the example, a gNB may communicate with a wireless device with a carrier with an example channel bandwidth 700. Arrow(s) in the diagram may depict a subcarrier in a multicarrier OFDM system. The OFDM system may use technology such as OFDM technology, SC-FDMA technology, and/or the like. In an example, an arrow 701 shows a subcarrier transmitting information symbols. In an example, a subcarrier spacing 702, between two contiguous subcarriers in a carrier, may be any one of 15KHz, 30KHz, 60 KHz, 120KHz, 240KHz etc. In an example, different subcarrier spacing may correspond to different transmission numerologies. In an example, a transmission numerology may comprise at least: a numerology index; a value of subcarrier spacing; a type of cyclic prefix (CP). In an example, a gNB may transmit to/receive from a UE on a number of subcarriers 703 in a carrier. In an example, a bandwidth occupied by a number of subcarriers 703 (transmission bandwidth) may be smaller than the channel bandwidth 700 of a carrier, due to guard band 704 and 705. In an example, a guard band 704 and 705 may be used to reduce interference to and from one or more neighbor carriers. A number of subcarriers (transmission bandwidth) in a carrier may depend on the channel bandwidth of the carrier and the subcarrier spacing. For example, a transmission bandwidth, for a carrier with 20MHz channel bandwidth and 15KHz subcarrier spacing, may be in number of 1024 subcarriers.

In an example, a gNB and a wireless device may communicate with multiple CCs when configured with CA. In an example, different component carriers may have different bandwidth and/or subcarrier spacing, if CA is supported. In an example, a gNB may transmit a first type of service to a UE on a first component carrier. The gNB may transmit a second type of service to the UE on a second component carrier. Different type of services may have different service requirement (*e.g.,* data rate, latency, reliability), which may be suitable for transmission via different component carrier having different subcarrier spacing and/or bandwidth. FIG. 7B shows an example embodiment. A first component carrier may comprise a first number of subcarriers 706 with a first subcarrier spacing 709. A second component carrier may comprise a second number of subcarriers 707 with a second subcarrier spacing 710. A third component carrier may comprise a third number of subcarriers 708 with a third subcarrier spacing 711. Carriers in a multicarrier OFDM communication system may be contiguous carriers, non-contiguous carriers, or a combination of both contiguous and non-contiguous carriers.

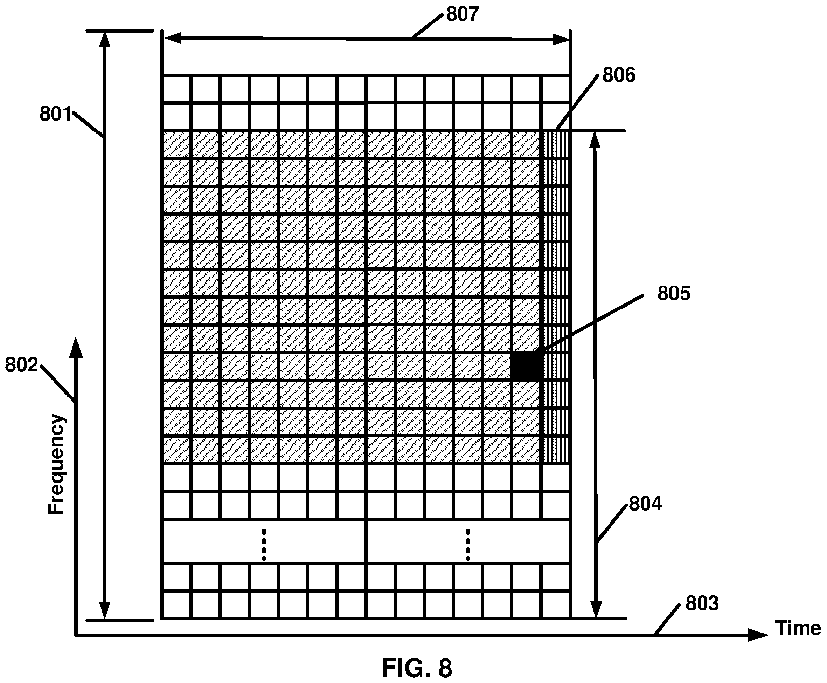

FIG. 8 is a diagram depicting OFDM radio resources as per an aspect of an embodiment of the present disclosure. In an example, a carrier may have a transmission bandwidth 801. In an example, a resource grid may be in a structure of frequency domain 802 and time domain 803. In an example, a resource grid may comprise a first number of OFDM symbols in a subframe and a second number of resource blocks, starting from a common resource block indicated by higher-layer signaling (*e*.*g*. RRC signaling), for a transmission numerology and a carrier. In an example, in a resource grid, a resource unit identified by a subcarrier index and a symbol index may be a resource element 805. In an example, a subframe may comprise a first number of OFDM symbols 807 depending on a numerology associated with a carrier. For example, when a subcarrier spacing of a numerology of a carrier is 15KHz, a subframe may have 14 OFDM symbols for a carrier. When a subcarrier spacing of a numerology is 30KHz, a subframe may have 28 OFDM symbols. When a subcarrier spacing of a numerology is 60Khz, a subframe may have 56 OFDM symbols, etc. In an example, a second number of resource blocks comprised in a resource grid of a carrier may depend on a bandwidth and a numerology of the carrier.

As shown in FIG. 8, a resource block 806 may comprise 12 subcarriers. In an example, multiple resource blocks may be grouped into a Resource Block Group (RBG) 804. In an example, a size of a RBG may depend on at least one of: a RRC message indicating a RBG size configuration; a size of a carrier bandwidth; or a size of a bandwidth part of a carrier. In an example, a carrier may comprise multiple bandwidth parts. A first bandwidth part of a carrier may have different frequency location and/or bandwidth from a second bandwidth part of the carrier.

In an example, a gNB may transmit a downlink control information comprising a downlink or uplink resource block assignment to a wireless device. A base station may transmit to or receive from, a wireless device, data packets (*e*.*g*. transport blocks) scheduled and transmitted via one or more resource blocks and one or more slots according to parameters in a downlink control information and/or RRC message(s). In an example, a starting symbol relative to a first slot of the one or more slots may be indicated to the wireless device. In an example, a gNB may transmit to or receive from, a wireless device, data packets scheduled on one or more RBGs and one or more slots.

In an example, a gNB may transmit a downlink control information comprising a downlink assignment to a wireless device via one or more PDCCHs. The downlink assignment may comprise parameters indicating at least modulation and coding format; resource allocation; and/or HARQ information related to DL-SCH. In an example, a resource allocation may comprise parameters of resource block allocation; and/or slot allocation. In an example, a gNB may dynamically allocate resources to a wireless device via a Cell-Radio Network Temporary Identifier (C-RNTI) on one or more PDCCHs. The wireless device may monitor the one or more PDCCHs in order to find possible allocation when its downlink reception is enabled. The wireless device may receive one or more downlink data package on one or more PDSCH scheduled by the one or more PDCCHs, when successfully detecting the one or more PDCCHs.

In an example, a gNB may allocate Configured Scheduling (CS) resources for downlink transmission to a wireless device. The gNB may transmit one or more RRC messages indicating a periodicity of the CS grant. The gNB may transmit a DCI via a PDCCH addressed to a Configured Scheduling-RNTI (CS-RNTI) activating the CS resources. The DCI may comprise parameters indicating that the downlink grant is a CS grant. The CS grant may be implicitly reused according to the periodicity defined by the one or more RRC messages, until deactivated.

In an example, a gNB may transmit a downlink control information comprising an uplink grant to a wireless device via one or more PDCCHs. The uplink grant may comprise parameters indicating at least modulation and coding format; resource allocation; and/or HARQ information related to UL-SCH. In an example, a resource allocation may comprise parameters of resource block allocation; and/or slot allocation. In an example, a gNB may dynamically allocate resources to a wireless device via a C-RNTI on one or more PDCCHs. The wireless device may monitor the one or more PDCCHs in order to find possible resource allocation. The wireless device may transmit one or more uplink data package via one or more PUSCH scheduled by the one or more PDCCHs, when successfully detecting the one or more PDCCHs.

In an example, a gNB may allocate CS resources for uplink data transmission to a wireless device. The gNB may transmit one or more RRC messages indicating a periodicity of the CS grant. The gNB may transmit a DCI via a PDCCH addressed to a CS-RNTI activating the CS resources. The DCI may comprise parameters indicating that the uplink grant is a CS grant. The CS grant may be implicitly reused according to the periodicity defined by the one or more RRC message, until deactivated.

In an example, a base station may transmit DCI/control signaling via PDCCH. The DCI may take a format in a plurality of formats. A DCI may comprise downlink and/or uplink scheduling information (*e.g.,* resource allocation information, HARQ related parameters, MCS), request for CSI (*e.g.,* aperiodic CQI reports), request for SRS, uplink power control commands for one or more cells, one or more timing information (*e.g.,* TB transmission/reception timing, HARQ feedback timing, etc.), etc. In an example, a DCI may indicate an uplink grant comprising transmission parameters for one or more transport blocks. In an example, a DCI may indicate downlink assignment indicating parameters for receiving one or more transport blocks. In an example, a DCI may be used by base station to initiate a contention-free random access at the wireless device. In an example, the base station may transmit a DCI comprising slot format indicator (SFI) notifying a slot format. In an example, the base station may transmit a DCI comprising pre-emption indication notifying the PRB(s) and/or OFDM symbol(s) where a UE may assume no transmission is intended for the UE. In an example, the base station may transmit a DCI for group power control of PUCCH or PUSCH or SRS. In an example, a DCI may correspond to an RNTI. In an example, the wireless device may obtain an RNTI in response to completing the initial access (*e.g.,* C-RNTI). In an example, the base station may configure an RNTI for the wireless (*e.g.,* CS-RNTI, TPC-CS-RNTI, TPC-PUCCH-RNTI, TPC-PUSCH-RNTI, TPC-SRS-RNTI). In an example, the wireless device may compute an RNTI (*e.g.,* the wireless device may compute RA-RNTI based on resources used for transmission of a preamble). In an example, an RNTI may have a pre-configured value (*e.g.,* P-RNTI or SI-RNTI). In an example, a wireless device may monitor a group common search space which may be used by base station for transmitting DCIs that are intended for a group of UEs. In an example, a group common DCI may correspond to an RNTI which is commonly configured for a group of UEs. In an example, a wireless device may monitor a UE-specific search space. In an example, a UE specific DCI may correspond to an RNTI configured for the wireless device.

A NR system may support a single beam operation and/or a multi-beam operation. In a multi-beam operation, a base station may perform a downlink beam sweeping to provide coverage for common control channels and/or downlink SS blocks, which may comprise at least a PSS, a SSS, and/or PBCH. A wireless device may measure quality of a beam pair link using one or more RSs. One or more SS blocks, or one or more CSI-RS resources, associated with a CSI-RS resource index (CRI), or one or more DM-RSs of PBCH, may be used as RS for measuring quality of a beam pair link. Quality of a beam pair link may be defined as a reference signal received power (RSRP) value, or a reference signal received quality (RSRQ) value, and/or a CSI value measured on RS resources. The base station may indicate whether an RS resource, used for measuring a beam pair link quality, is quasi-co-located (QCLed) with DM-RSs of a control channel. A RS resource and DM-RSs of a control channel may be called QCLed when a channel characteristics from a transmission on an RS to a wireless device, and that from a transmission on a control channel to a wireless device, are similar or same under a configured criterion. In a multi-beam operation, a wireless device may perform an uplink beam sweeping to access a cell.

In an example, a wireless device may be configured to monitor PDCCH on one or more beam pair links simultaneously depending on a capability of a wireless device. This may increase robustness against beam pair link blocking. A base station may transmit one or more messages to configure a wireless device to monitor PDCCH on one or more beam pair links in different PDCCH OFDM symbols. For example, a base station may transmit higher layer signaling (*e*.*g*. RRC signaling) or MAC CE comprising parameters related to the Rx beam setting of a wireless device for monitoring PDCCH on one or more beam pair links. A base station may transmit indication of spatial QCL assumption between an DL RS antenna port(s) (for example, cell-specific CSI-RS, or wireless device-specific CSI-RS, or SS block, or PBCH with or without DM-RSs of PBCH), and DL RS antenna port(s) for demodulation of DL control channel. Signaling for beam indication for a PDCCH may be MAC CE signaling, or RRC signaling, or DCI signaling, or specification-transparent and/or implicit method, and combination of these signaling methods.

For reception of unicast DL data channel, a base station may indicate spatial QCL parameters between DL RS antenna port(s) and DM-RS antenna port(s) of DL data channel. The base station may transmit DCI (*e*.*g*. downlink grants) comprising information indicating the RS antenna port(s). The information may indicate RS antenna port(s) which may be QCL-ed with the DM-RS antenna port(s). Different set of DM-RS antenna port(s) for a DL data channel may be indicated as QCL with different set of the RS antenna port(s).

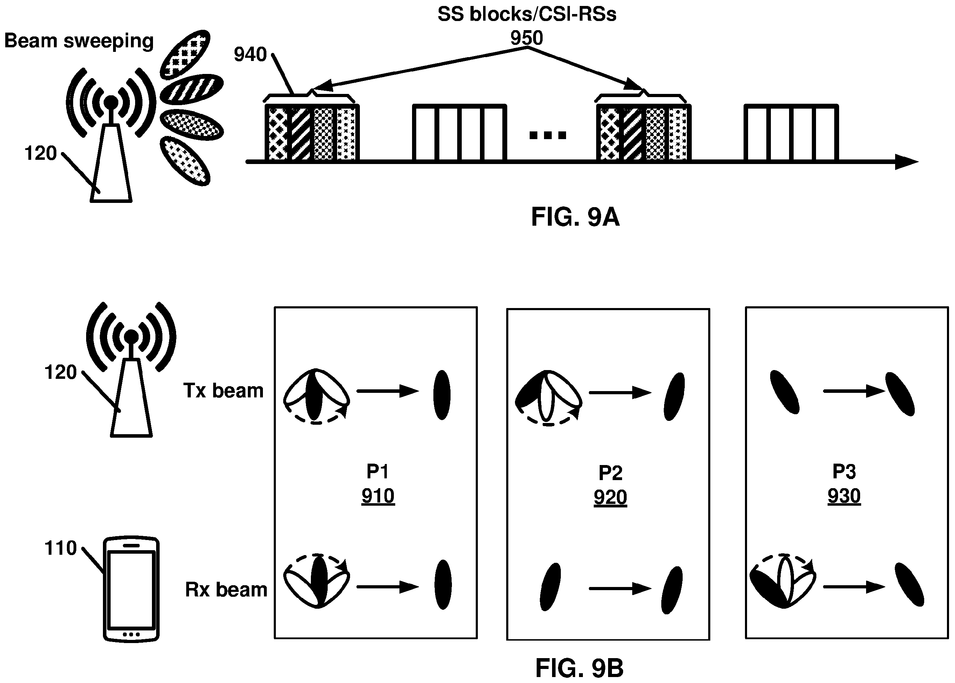

FIG. 9A is an example of beam sweeping in a DL channel. In an RRC_INACTIVE state or RRC_IDLE state, a wireless device may assume that SS blocks form an SS burst 940, and an SS burst set 950. The SS burst set 950 may have a given periodicity. For example, in a multi-beam operation, a base station 120 may transmit SS blocks in multiple beams, together forming a SS burst 940. One or more SS blocks may be transmitted on one beam. If multiple SS bursts 940 are transmitted with multiple beams, SS bursts together may form SS burst set 950.

A wireless device may further use CSI-RS in the multi-beam operation for estimating a beam quality of a links between a wireless device and a base station. A beam may be associated with a CSI-RS. For example, a wireless device may, based on a RSRP measurement on CSI-RS, report a beam index, as indicated in a CRI for downlink beam selection, and associated with a RSRP value of a beam. A CSI-RS may be transmitted on a CSI-RS resource including at least one of one or more antenna ports, one or more time or frequency radio resources. A CSI-RS resource may be configured in a cell-specific way by common RRC signaling, or in a wireless device-specific way by dedicated RRC signaling, and/or L1/L2 signaling. Multiple wireless devices covered by a cell may measure a cell-specific CSI-RS resource. A dedicated subset of wireless devices covered by a cell may measure a wireless device-specific CSI-RS resource.

A CSI-RS resource may be transmitted periodically, or using aperiodic transmission, or using a multi-shot or semi-persistent transmission. For example, in a periodic transmission in FIG. 9A, a base station 120 may transmit configured CSI-RS resources 940 periodically using a configured periodicity in a time domain. In an aperiodic transmission, a configured CSI-RS resource may be transmitted in a dedicated time slot. In a multi-shot or semi-persistent transmission, a configured CSI-RS resource may be transmitted within a configured period. Beams used for CSI-RS transmission may have different beam width than beams used for SS-blocks transmission.

FIG. 9B is an example of a beam management procedure in an example new radio network. A base station 120 and/or a wireless device 110 may perform a downlink L1/L2 beam management procedure. One or more of the following downlink L1/L2 beam management procedures may be performed within one or more wireless devices 110 and one or more base stations 120. In an example, a P-1 procedure 910 may be used to enable the wireless device 110 to measure one or more Transmission (Tx) beams associated with the base station 120 to support a selection of a first set of Tx beams associated with the base station 120 and a first set of Rx beam(s) associated with a wireless device 110. For beamforming at a base station 120, a base station 120 may sweep a set of different TX beams. For beamforming at a wireless device 110, a wireless device 110 may sweep a set of different Rx beams. In an example, a P-2 procedure 920 may be used to enable a wireless device 110 to measure one or more Tx beams associated with a base station 120 to possibly change a first set of Tx beams associated with a base station 120. A P-2 procedure 920 may be performed on a possibly smaller set of beams for beam refinement than in the P-1 procedure 910. A P-2 procedure 920 may be a special case of a P-1 procedure 910. In an example, a P-3 procedure 930 may be used to enable a wireless device 110 to measure at least one Tx beam associated with a base station 120 to change a first set of Rx beams associated with a wireless device 110.

A wireless device 110 may transmit one or more beam management reports to a base station 120. In one or more beam management reports, a wireless device 110 may indicate some beam pair quality parameters, comprising at least, one or more beam identifications; RSRP; Precoding Matrix Indicator (PMI)/Channel Quality Indicator (CQI)/Rank Indicator (RI) of a subset of configured beams. Based on one or more beam management reports, a base station 120 may transmit to a wireless device 110 a signal indicating that one or more beam pair links are one or more serving beams. A base station 120 may transmit PDCCH and PDSCH for a wireless device 110 using one or more serving beams.

In an example embodiment, new radio network may support a Bandwidth Adaptation (BA). In an example, receive and/or transmit bandwidths configured by an UE employing a BA may not be large. For example, a receive and/or transmit bandwidths may not be as large as a bandwidth of a cell. Receive and/or transmit bandwidths may be adjustable. For example, a UE may change receive and/or transmit bandwidths, *e.g.,* to shrink during period of low activity to save power. For example, a UE may change a location of receive and/or transmit bandwidths in a frequency domain, *e.g.* to increase scheduling flexibility. For example, a UE may change a subcarrier spacing, *e.g.* to allow different services.

In an example embodiment, a subset of a total cell bandwidth of a cell may be referred to as a Bandwidth Part (BWP). A base station may configure a UE with one or more BWPs to achieve a BA. For example, a base station may indicate, to a UE, which of the one or more (configured) BWPs is an active BWP.

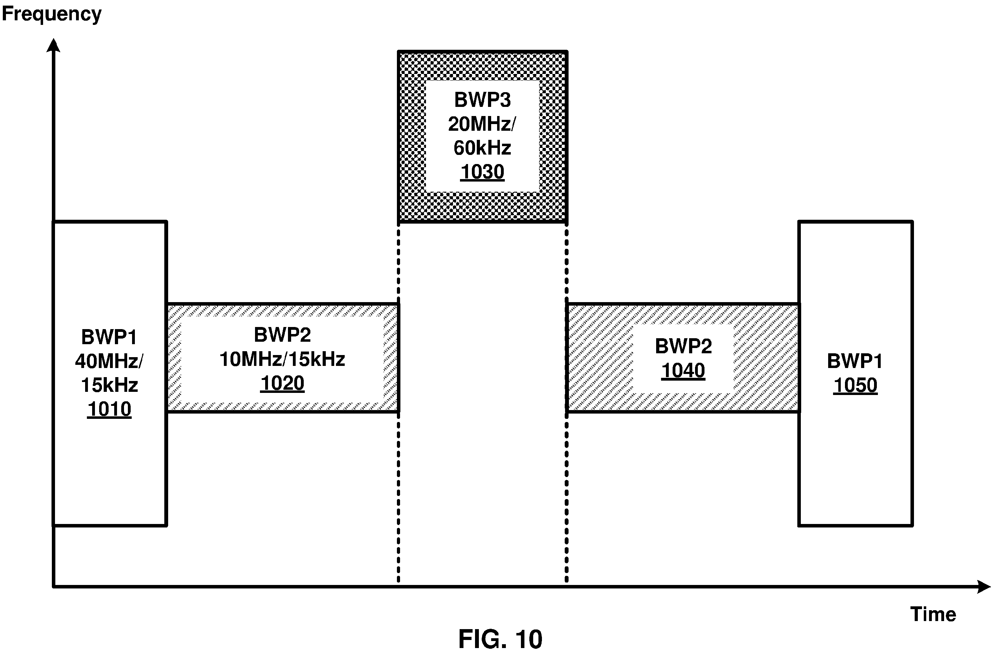

FIG. 10 is an example diagram of 3 BWPs configured: BWP1 (1010 and 1050) with a width of 40 MHz and subcarrier spacing of 15 kHz; BWP2 (1020 and 1040) with a width of 10 MHz and subcarrier spacing of 15 kHz; BWP3 1030 with a width of 20 MHz and subcarrier spacing of 60 kHz.

In an example, a UE, configured for operation in one or more BWPs of a cell, may be configured by one or more higher layers (*e*.*g*. RRC layer) for a cell a set of one or more BWPs (*e.g.,* at most four BWPs) for receptions by the UE (DL BWP set) in a DL bandwidth by at least one parameter DL-BWP and a set of one or more BWPs *(e.g.,* at most four BWPs) for transmissions by a UE (UL BWP set) in an UL bandwidth by at least one parameter UL-BWP for a cell.

To enable BA on the PCell, a base station may configure a UE with one or more UL and DL BWP pairs. To enable BA on SCells (*e.g.,* in case of CA), a base station may configure a UE at least with one or more DL BWPs (*e.g.,* there may be none in an UL).

In an example, an initial active DL BWP may be defined by at least one of a location and number of contiguous PRBs, a subcarrier spacing, or a cyclic prefix, for a control resource set for at least one common search space. For operation on the PCell, one or more higher layer parameters may indicate at least one initial UL BWP for a random access procedure. If a UE is configured with a secondary carrier on a primary cell, the UE may be configured with an initial BWP for random access procedure on a secondary carrier.

In an example, for unpaired spectrum operation, a UE may expect that a center frequency for a DL BWP may be same as a center frequency for a UL BWP.

For example, for a DL BWP or an UL BWP in a set of one or more DL BWPs or one or more UL BWPs, respectively, a base station may semi-statistically configure a UE for a cell with one or more parameters indicating at least one of following: a subcarrier spacing; a cyclic prefix; a number of contiguous PRBs; an index in the set of one or more DL BWPs and/or one or more UL BWPs; a link between a DL BWP and an UL BWP from a set of configured DL BWPs and UL BWPs; a DCI detection to a PDSCH reception timing; a PDSCH reception to a HARQ-ACK transmission timing value; a DCI detection to a PUSCH transmission timing value; an offset of a first PRB of a DL bandwidth or an UL bandwidth, respectively, relative to a first PRB of a bandwidth.

In an example, for a DL BWP in a set of one or more DL BWPs on a PCell, a base station may configure a UE with one or more control resource sets for at least one type of common search space and/or one UE-specific search space. For example, a base station may not configure a UE without a common search space on a PCell, or on a PSCell, in an active DL BWP.

For an UL BWP in a set of one or more UL BWPs, a base station may configure a UE with one or more resource sets for one or more PUCCH transmissions.

In an example, if a DCI comprises a BWP indicator field, a BWP indicator field value may indicate an active DL BWP, from a configured DL BWP set, for one or more DL receptions. If a DCI comprises a BWP indicator field, a BWP indicator field value may indicate an active UL BWP, from a configured UL BWP set, for one or more UL transmissions.

In an example, for a PCell, a base station may semi-statistically configure a UE with a default DL BWP among configured DL BWPs. If a UE is not provided a default DL BWP, a default BWP may be an initial active DL BWP.

In an example, a base station may configure a UE with a timer value for a PCell. For example, a UE may start a timer, referred to as BWP inactivity timer, when a UE detects a DCI indicating an active DL BWP, other than a default DL BWP, for a paired spectrum operation or when a UE detects a DCI indicating an active DL BWP or UL BWP, other than a default DL BWP or UL BWP, for an unpaired spectrum operation. The UE may increment the timer by an interval of a first value (*e.g.,* the first value may be 1 millisecond or 0.5 milliseconds) if the UE does not detect a DCI during the interval for a paired spectrum operation or for an unpaired spectrum operation. In an example, the timer may expire when the timer is equal to the timer value. A UE may switch to the default DL BWP from an active DL BWP when the timer expires.

In an example, a base station may semi-statistically configure a UE with one or more BWPs. A UE may switch an active BWP from a first BWP to a second BWP in response to receiving a DCI indicating the second BWP as an active BWP and/or in response to an expiry of BWP inactivity timer (for example, the second BWP may be a default BWP). For example, FIG. 10 is an example diagram of 3 BWPs configured, BWP1 (1010 and 1050), BWP2 (1020 and 1040), and BWP3 (1030). BWP2 (1020 and 1040) may be a default BWP. BWP1 (1010) may be an initial active BWP. In an example, a UE may switch an active BWP from BWP1 1010 to BWP2 1020 in response to an expiry of BWP inactivity timer. For example, a UE may switch an active BWP from BWP2 1020 to BWP3 1030 in response to receiving a DCI indicating BWP3 1030 as an active BWP. Switching an active BWP from BWP3 1030 to BWP2 1040 and/or from BWP2 1040 to BWP1 1050 may be in response to receiving a DCI indicating an active BWP and/or in response to an expiry of BWP inactivity timer.

In an example, if a UE is configured for a secondary cell with a default DL BWP among configured DL BWPs and a timer value, UE procedures on a secondary cell may be same as on a primary cell using the timer value for the secondary cell and the default DL BWP for the secondary cell.

In an example, if a base station configures a UE with a first active DL BWP and a first active UL BWP on a secondary cell or carrier, a UE may employ an indicated DL BWP and an indicated UL BWP on a secondary cell as a respective first active DL BWP and first active UL BWP on a secondary cell or carrier.

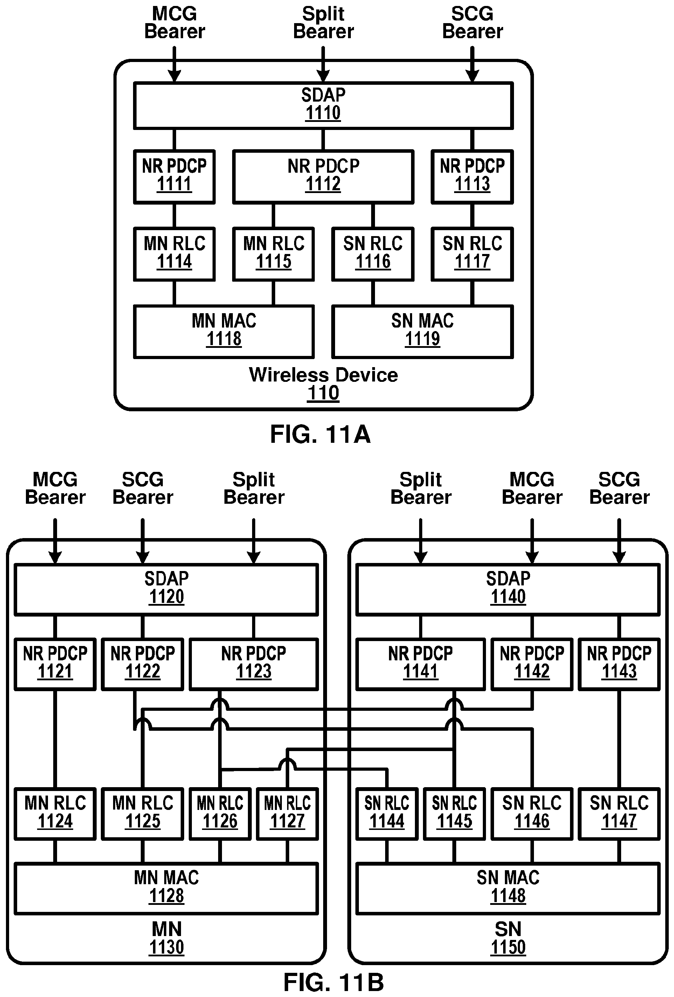

FIG. 11A and FIG. 11B show packet flows employing a multi connectivity (*e*.*g*. dual connectivity, multi connectivity, tight interworking, and/or the like). FIG. 11A is an example diagram of a protocol structure of a wireless device 110 (*e.g.* UE) with CA and/or multi connectivity as per an aspect of an embodiment. FIG. 11B is an example diagram of a protocol structure of multiple base stations with CA and/or multi connectivity as per an aspect of an embodiment. The multiple base stations may comprise a master node, MN 1130 (*e.g.* a master node, a master base station, a master gNB, a master eNB, and/or the like) and a secondary node, SN 1150 (*e.g.* a secondary node, a secondary base station, a secondary gNB, a secondary eNB, and/or the like). A master node 1130 and a secondary node 1150 may co-work to communicate with a wireless device 110.

When multi connectivity is configured for a wireless device 110, the wireless device 110, which may support multiple reception/transmission functions in an RRC connected state, may be configured to utilize radio resources provided by multiple schedulers of a multiple base stations. Multiple base stations may be inter-connected via a non-ideal or ideal backhaul (*e*.*g*. Xn interface, X2 interface, and/or the like). A base station involved in multi connectivity for a certain wireless device may perform at least one of two different roles: a base station may either act as a master base station or as a secondary base station. In multi connectivity, a wireless device may be connected to one master base station and one or more secondary base stations. In an example, a master base station (*e.g.* the MN 1130) may provide a master cell group (MCG) comprising a primary cell and/or one or more secondary cells for a wireless device (*e.g.* the wireless device 110). A secondary base station *(e.g.* the SN 1150) may provide a secondary cell group (SCG) comprising a primary secondary cell (PSCell) and/or one or more secondary cells for a wireless device (*e.g.* the wireless device 110).

In multi connectivity, a radio protocol architecture that a bearer employs may depend on how a bearer is setup. In an example, three different type of bearer setup options may be supported: an MCG bearer, an SCG bearer, and/or a split bearer. A wireless device may receive/transmit packets of an MCG bearer via one or more cells of the MCG, and/or may receive/transmits packets of an SCG bearer via one or more cells of an SCG. Multi-connectivity may also be described as having at least one bearer configured to use radio resources provided by the secondary base station. Multi-connectivity may or may not be configured/implemented in some of the example embodiments.

In an example, a wireless device (*e*.*g*. Wireless Device 110) may transmit and/or receive: packets of an MCG bearer via an SDAP layer (*e.g.* SDAP 1110), a PDCP layer (*e.g.* NR PDCP 1111), an RLC layer (*e.g.* MN RLC 1114), and a MAC layer *(*e*.g.* MN MAC 1118); packets of a split bearer via an SDAP layer (*e.g.* SDAP 1110), a PDCP layer (*e.g.* NR PDCP 1112), one of a master or secondary RLC layer *(e.g.* MN RLC 1115, SN RLC 1116), and one of a master or secondary MAC layer (*e.g.* MN MAC 1118, SN MAC 1119); and/or packets of an SCG bearer via an SDAP layer (*e.g.* SDAP 1110), a PDCP layer (*e.g.* NR PDCP 1113), an RLC layer (*e.g.* SN RLC 1117), and a MAC layer (*e.g.* MN MAC 1119).

In an example, a master base station (*e*.*g*. MN 1130) and/or a secondary base station (*e.g.* SN 1150) may transmit/receive: packets of an MCG bearer via a master or secondary node SDAP layer (*e*.*g*. SDAP 1120, SDAP 1140), a master or secondary node PDCP layer (*e.g.* NR PDCP 1121, NR PDCP 1142), a master node RLC layer (*e.g.* MN RLC 1124, MN RLC 1125), and a master node MAC layer (*e.g.* MN MAC 1128); packets of an SCG bearer via a master or secondary node SDAP layer (*e*.*g*. SDAP 1120, SDAP 1140), a master or secondary node PDCP layer (*e.g.* NR PDCP 1122, NR PDCP 1143), a secondary node RLC layer (*e.g.* SN RLC 1146, SN RLC 1147), and a secondary node MAC layer (*e.g.* SN MAC 1148); packets of a split bearer via a master or secondary node SDAP layer (*e.g.* SDAP 1120, SDAP 1140), a master or secondary node PDCP layer (*e.g.* NR PDCP 1123, NR PDCP 1141), a master or secondary node RLC layer (*e.g.* MN RLC 1126, SN RLC 1144, SN RLC 1145, MN RLC 1127), and a master or secondary node MAC layer (*e.g.* MN MAC 1128, SN MAC 1148).

In multi connectivity, a wireless device may configure multiple MAC entities: one MAC entity (*e.g.* MN MAC 1118) for a master base station, and other MAC entities (*e.g.* SN MAC 1119) for a secondary base station. In multi-connectivity, a configured set of serving cells for a wireless device may comprise two subsets: an MCG comprising serving cells of a master base station, and SCGs comprising serving cells of a secondary base station. For an SCG, one or more of following configurations may be applied: at least one cell of an SCG has a configured UL CC and at least one cell of a SCG, named as primary secondary cell (PSCell, PCell of SCG, or sometimes called PCell), is configured with PUCCH resources; when an SCG is configured, there may be at least one SCG bearer or one Split bearer; upon detection of a physical layer problem or a random access problem on a PSCell, or a number of NR RLC retransmissions has been reached associated with the SCG, or upon detection of an access problem on a PSCell during a SCG addition or a SCG change: an RRC connection re-establishment procedure may not be triggered, UL transmissions towards cells of an SCG may be stopped, a master base station may be informed by a wireless device of a SCG failure type, for split bearer, a DL data transfer over a master base station may be maintained; an NR RLC acknowledged mode (AM) bearer may be configured for a split bearer; PCell and/or PSCell may not be de-activated; PSCell may be changed with a SCG change procedure (*e.g.* with security key change and a RACH procedure); and/or a bearer type change between a split bearer and a SCG bearer or simultaneous configuration of a SCG and a split bearer may or may not be supported.

With respect to interaction between a master base station and a secondary base stations for multi-connectivity, one or more of the following may be applied: a master base station and/or a secondary base station may maintain RRM measurement configurations of a wireless device; a master base station may (*e*.*g*. based on received measurement reports, traffic conditions, and/or bearer types) decide to request a secondary base station to provide additional resources (*e*.*g*. serving cells) for a wireless device; upon receiving a request from a master base station, a secondary base station may create/modify a container that may result in configuration of additional serving cells for a wireless device (or decide that the secondary base station has no resource available to do so); for a UE capability coordination, a master base station may provide (a part of) an AS configuration and UE capabilities to a secondary base station; a master base station and a secondary base station may exchange information about a UE configuration by employing of RRC containers (inter-node messages) carried via Xn messages; a secondary base station may initiate a reconfiguration of the secondary base station existing serving cells (*e.g.* PUCCH towards the secondary base station); a secondary base station may decide which cell is a PSCell within a SCG; a master base station may or may not change content of RRC configurations provided by a secondary base station; in case of a SCG addition and/or a SCG SCell addition, a master base station may provide recent (or the latest) measurement results for SCG cell(s); a master base station and secondary base stations may receive information of SFN and/or subframe offset of each other from OAM and/or via an Xn interface, (*e.g.* for a purpose of DRX alignment and/or identification of a measurement gap). In an example, when adding a new SCG SCell, dedicated RRC signaling may be used for sending required system information of a cell as for CA, except for a SFN acquired from a MIB of a PSCell of a SCG.

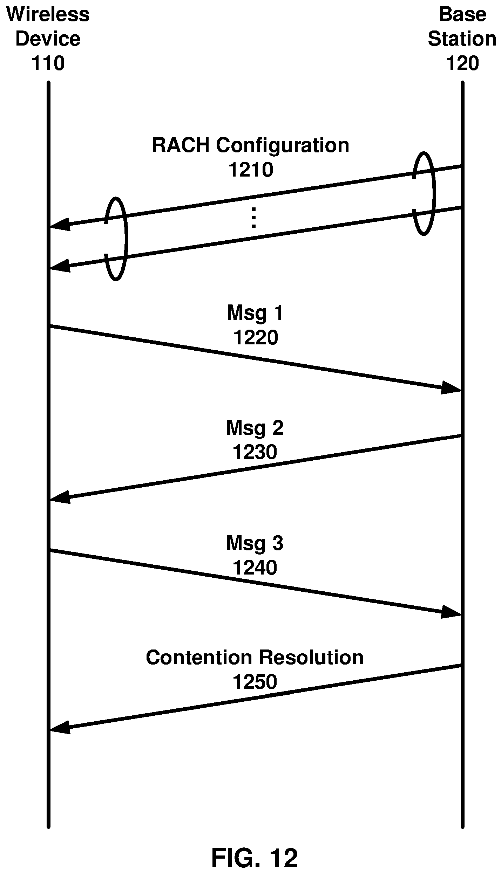

FIG. 12 is an example diagram of a random access procedure. One or more events may trigger a random access procedure. For example, one or more events may be at least one of following: initial access from RRC_IDLE, RRC connection re-establishment procedure, handover, DL or UL data arrival during RRC_CONNECTED when UL synchronization status is non-synchronised, transition from RRC_Inactive, and/or request for other system information. For example, a PDCCH order, a MAC entity, and/or a beam failure indication may initiate a random access procedure.

In an example embodiment, a random access procedure may be at least one of a contention based random access procedure and a contention free random access procedure. For example, a contention based random access procedure may comprise, one or more Msg 1 1220 transmissions, one or more Msg2 1230 transmissions, one or more Msg3 1240 transmissions, and contention resolution 1250. For example, a contention free random access procedure may comprise one or more Msg 1 1220 transmissions and one or more Msg2 1230 transmissions.

In an example, a base station may transmit (*e.g.,* unicast, multicast, or broadcast), to a UE, a RACH configuration 1210 via one or more beams. The RACH configuration 1210 may comprise one or more parameters indicating at least one of following: available set of PRACH resources for a transmission of a random access preamble, initial preamble power (*e.g.,* random access preamble initial received target power), an RSRP threshold for a selection of a SS block and corresponding PRACH resource, a power-ramping factor (*e.g.,* random access preamble power ramping step), random access preamble index, a maximum number of preamble transmission, preamble group A and group B, a threshold (*e.g.,* message size) to determine the groups of random access preambles, a set of one or more random access preambles for system information request and corresponding PRACH resource(s), if any, a set of one or more random access preambles for beam failure recovery request and corresponding PRACH resource(s), if any, a time window to monitor RA response(s), a time window to monitor response(s) on beam failure recovery request, and/or a contention resolution timer.

In an example, the Msg1 1220 may be one or more transmissions of a random access preamble. For a contention based random access procedure, a UE may select a SS block with a RSRP above the RSRP threshold. If random access preambles group B exists, a UE may select one or more random access preambles from a group A or a group B depending on a potential Msg3 1240 size. If a random access preambles group B does not exist, a UE may select the one or more random access preambles from a group A. A UE may select a random access preamble index randomly (*e*.*g*. with equal probability or a normal distribution) from one or more random access preambles associated with a selected group. If a base station semi-statistically configures a UE with an association between random access preambles and SS blocks, the UE may select a random access preamble index randomly with equal probability from one or more random access preambles associated with a selected SS block and a selected group.

For example, a UE may initiate a contention free random access procedure based on a beam failure indication from a lower layer. For example, a base station may semi-statistically configure a UE with one or more contention free PRACH resources for beam failure recovery request associated with at least one of SS blocks and/or CSI-RSs. If at least one of SS blocks with a RSRP above a first RSRP threshold amongst associated SS blocks or at least one of CSI-RSs with a RSRP above a second RSRP threshold amongst associated CSI-RSs is available, a UE may select a random access preamble index corresponding to a selected SS block or CSI-RS from a set of one or more random access preambles for beam failure recovery request.

For example, a UE may receive, from a base station, a random access preamble index via PDCCH or RRC for a contention free random access procedure. If a base station does not configure a UE with at least one contention free PRACH resource associated with SS blocks or CSI-RS, the UE may select a random access preamble index. If a base station configures a UE with one or more contention free PRACH resources associated with SS blocks and at least one SS block with a RSRP above a first RSRP threshold amongst associated SS blocks is available, the UE may select the at least one SS block and select a random access preamble corresponding to the at least one SS block. If a base station configures a UE with one or more contention free PRACH resources associated with CSI-RSs and at least one CSI-RS with a RSRP above a second RSPR threshold amongst the associated CSI-RSs is available, the UE may select the at least one CSI-RS and select a random access preamble corresponding to the at least one CSI-RS.

A UE may perform one or more Msg1 1220 transmissions by transmitting the selected random access preamble. For example, if a UE selects an SS block and is configured with an association between one or more PRACH occasions and one or more SS blocks, the UE may determine an PRACH occasion from one or more PRACH occasions corresponding to a selected SS block. For example, if a UE selects a CSI-RS and is configured with an association between one or more PRACH occasions and one or more CSI-RSs, the UE may determine a PRACH occasion from one or more PRACH occasions corresponding to a selected CSI-RS. A UE may transmit, to a base station, a selected random access preamble via a selected PRACH occasions. A UE may determine a transmit power for a transmission of a selected random access preamble at least based on an initial preamble power and a power-ramping factor. A UE may determine a RA-RNTI associated with a selected PRACH occasions in which a selected random access preamble is transmitted. For example, a UE may not determine a RA-RNTI for a beam failure recovery request. A UE may determine an RA-RNTI at least based on an index of a first OFDM symbol and an index of a first slot of a selected PRACH occasions, and/or an uplink carrier index for a transmission of Msg1 1220.

In an example, a UE may receive, from a base station, a random access response, Msg 2 1230. A UE may start a time window (*e.g., ra-ResponseWindow*) to monitor a random access response. For beam failure recovery request, a base station may configure a UE with a different time window (*e.g., bfr-ResponseWindow*) to monitor response on beam failure recovery request. For example, a UE may start a time window (*e.g., ra-ResponseWindow* or *bfr-ResponseWindow*) at a start of a first PDCCH occasion after a fixed duration of one or more symbols from an end of a preamble transmission. If a UE transmits multiple preambles, the UE may start a time window at a start of a first PDCCH occasion after a fixed duration of one or more symbols from an end of a first preamble transmission. A UE may monitor a PDCCH of a cell for at least one random access response identified by a RA-RNTI or for at least one response to beam failure recovery request identified by a C-RNTI while a timer for a time window is running.

In an example, a UE may consider a reception of random access response successful if at least one random access response comprises a random access preamble identifier corresponding to a random access preamble transmitted by the UE. A UE may consider the contention free random access procedure successfully completed if a reception of random access response is successful. If a contention free random access procedure is triggered for a beam failure recovery request, a UE may consider a contention free random access procedure successfully complete if a PDCCH transmission is addressed to a C-RNTI. In an example, if at least one random access response comprises only a random access preamble identifier, a UE may consider the random access procedure successfully completed and may indicate a reception of an acknowledgement for a system information request to upper layers. If a UE has signaled multiple preamble transmissions, the UE may stop transmitting remaining preambles (if any) in response to a successful reception of a corresponding random access response.

In an example, a UE may perform one or more Msg 3 1240 transmissions in response to a successful reception of random access response (*e.g.,* for a contention based random access procedure). A UE may adjust an uplink transmission timing based on a timing advanced command indicated by a random access response and may transmit one or more transport blocks based on an uplink grant indicated by a random access response. Subcarrier spacing for PUSCH transmission for Msg3 1240 may be provided by at least one higher layer (*e.g.* RRC) parameter. A UE may transmit a random access preamble via PRACH and Msg3 1240 via PUSCH on a same cell. A base station may indicate an UL BWP for a PUSCH transmission of Msg3 1240 via system information block. A UE may employ HARQ for a retransmission of Msg 3 1240.

In an example, multiple UEs may perform Msg 1 1220 by transmitting a same preamble to a base station and receive, from the base station, a same random access response comprising an identity (*e.g.,* TC-RNTI). Contention resolution 1250 may ensure that a UE does not incorrectly use an identity of another UE. For example, contention resolution 1250 may be based on C-RNTI on PDCCH or a UE contention resolution identity on DL-SCH. For example, if a base station assigns a C-RNTI to a UE, the UE may perform contention resolution 1250 based on a reception of a PDCCH transmission that is addressed to the C-RNTI. In response to detection of a C-RNTI on a PDCCH, a UE may consider contention resolution 1250 successful and may consider a random access procedure successfully completed. If a UE has no valid C-RNTI, a contention resolution may be addressed by employing a TC-RNTI. For example, if a MAC PDU is successfully decoded and a MAC PDU comprises a UE contention resolution identity MAC CE that matches the CCCH SDU transmitted in Msg3 1250, a UE may consider the contention resolution 1250 successful and may consider the random access procedure successfully completed.

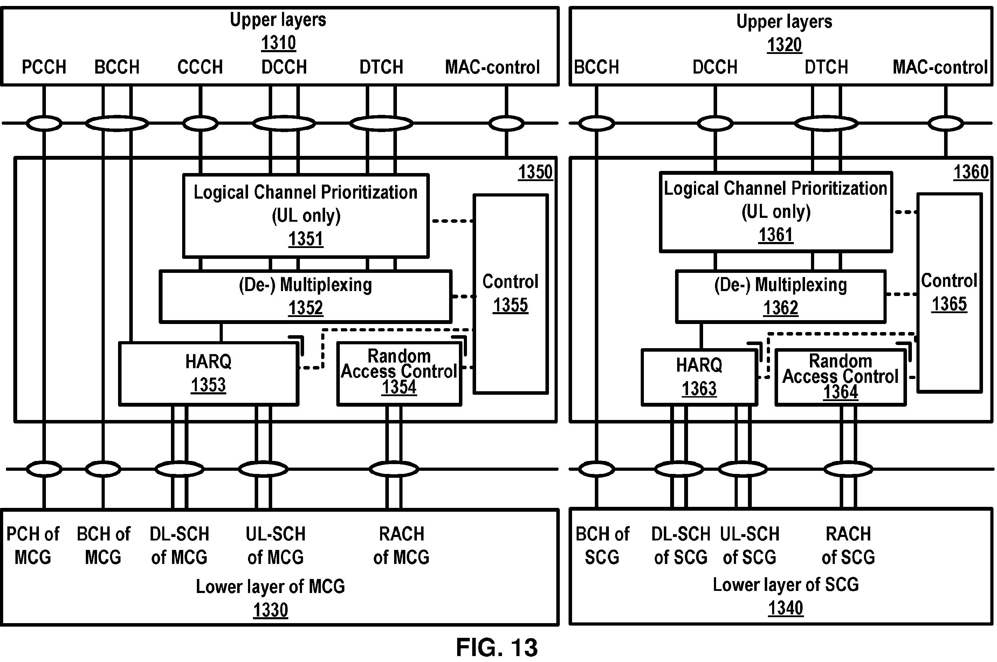

FIG. 13 is an example structure for MAC entities as per an aspect of an embodiment. In an example, a wireless device may be configured to operate in a multi-connectivity mode. A wireless device in RRC_CONNECTED with multiple RX/TX may be configured to utilize radio resources provided by multiple schedulers located in a plurality of base stations. The plurality of base stations may be connected via a non-ideal or ideal backhaul over the Xn interface. In an example, a base station in a plurality of base stations may act as a master base station or as a secondary base station. A wireless device may be connected to one master base station and one or more secondary base stations. A wireless device may be configured with multiple MAC entities, *e.g.* one MAC entity for master base station, and one or more other MAC entities for secondary base station(s). In an example, a configured set of serving cells for a wireless device may comprise two subsets: an MCG comprising serving cells of a master base station, and one or more SCGs comprising serving cells of a secondary base station(s). Figure 13 illustrates an example structure for MAC entities when MCG and SCG are configured for a wireless device.

In an example, at least one cell in a SCG may have a configured UL CC, wherein a cell of at least one cell may be called PSCell or PCell of SCG, or sometimes may be simply called PCell. A PSCell may be configured with PUCCH resources. In an example, when a SCG is configured, there may be at least one SCG bearer or one split bearer. In an example, upon detection of a physical layer problem or a random access problem on a PSCell, or upon reaching a number of RLC retransmissions associated with the SCG, or upon detection of an access problem on a PSCell during a SCG addition or a SCG change: an RRC connection re-establishment procedure may not be triggered, UL transmissions towards cells of an SCG may be stopped, a master base station may be informed by a UE of a SCG failure type and DL data transfer over a master base station may be maintained.

In an example, a MAC sublayer may provide services such as data transfer and radio resource allocation to upper layers (*e.g.* 1310 or 1320). A MAC sublayer may comprise a plurality of MAC entities (*e.g.* 1350 and 1360). A MAC sublayer may provide data transfer services on logical channels. To accommodate different kinds of data transfer services, multiple types of logical channels may be defined. A logical channel may support transfer of a particular type of information. A logical channel type may be defined by what type of information (*e.g.,* control or data) is transferred. For example, BCCH, PCCH, CCCH and DCCH may be control channels and DTCH may be a traffic channel. In an example, a first MAC entity (*e.g.* 1310) may provide services on PCCH, BCCH, CCCH, DCCH, DTCH and MAC control elements. In an example, a second MAC entity (*e.g.* 1320) may provide services on BCCH, DCCH, DTCH and MAC control elements.

A MAC sublayer may expect from a physical layer (*e.g.* 1330 or 1340) services such as data transfer services, signaling of HARQ feedback, signaling of scheduling request or measurements (*e*.*g*. CQI). In an example, in dual connectivity, two MAC entities may be configured for a wireless device: one for MCG and one for SCG. A MAC entity of wireless device may handle a plurality of transport channels. In an example, a first MAC entity may handle first transport channels comprising a PCCH of MCG, a first BCH of MCG, one or more first DL-SCHs of MCG, one or more first UL-SCHs of MCG and one or more first RACHs of MCG. In an example, a second MAC entity may handle second transport channels comprising a second BCH of SCG, one or more second DL-SCHs of SCG, one or more second UL-SCHs of SCG and one or more second RACHs of SCG.

In an example, if a MAC entity is configured with one or more SCells, there may be multiple DL-SCHs and there may be multiple UL-SCHs as well as multiple RACHs per MAC entity. In an example, there may be one DL-SCH and UL-SCH on a SpCell. In an example, there may be one DL-SCH, zero or one UL-SCH and zero or one RACH for an SCell. A DL-SCH may support receptions using different numerologies and/or TTI duration within a MAC entity. A UL-SCH may also support transmissions using different numerologies and/or TTI duration within the MAC entity.

In an example, a MAC sublayer may support different functions and may control these functions with a control (*e.g.* 1355 or 1365) element. Functions performed by a MAC entity may comprise mapping between logical channels and transport channels (*e.g.,* in uplink or downlink), multiplexing (*e*.*g*. 1352 or 1362) of MAC SDUs from one or different logical channels onto transport blocks (TB) to be delivered to the physical layer on transport channels (*e.g.,* in uplink), demultiplexing (*e.g.* 1352 or 1362) of MAC SDUs to one or different logical channels from transport blocks (TB) delivered from the physical layer on transport channels (*e.g.,* in downlink), scheduling information reporting (*e.g.,* in uplink), error correction through HARQ in uplink or downlink (*e.g*. 1363), and logical channel prioritization in uplink (*e.g.* 1351 or 1361). A MAC entity may handle a random access process (*e.g.* 1354 or 1364).

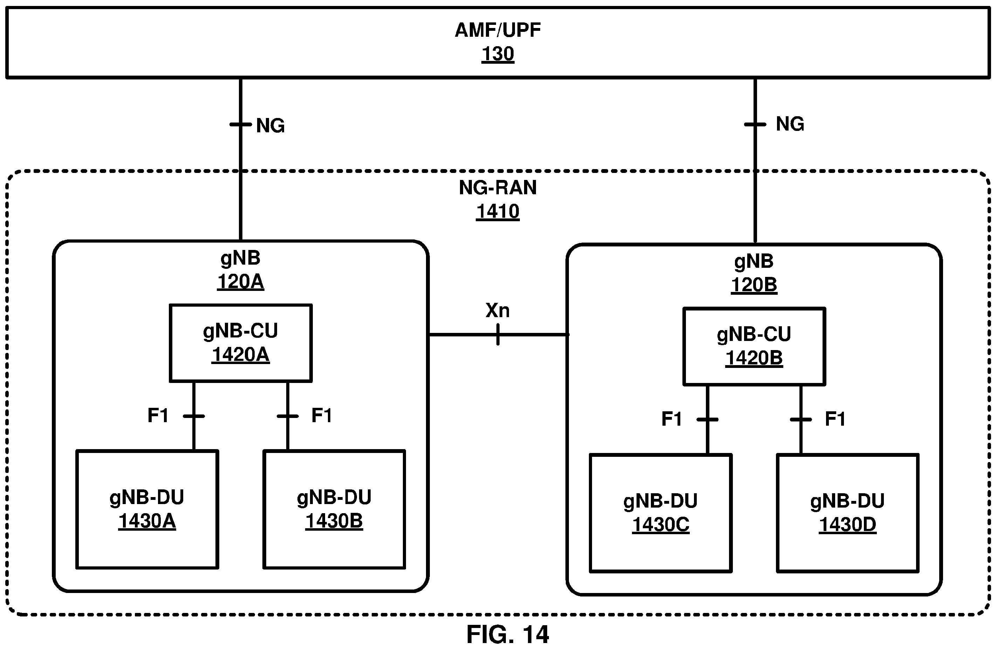

FIG. 14 is an example diagram of a RAN architecture comprising one or more base stations. In an example, a protocol stack (*e.g.* RRC, SDAP, PDCP, RLC, MAC, and PHY) may be supported at a node. A base station (*e*.*g*. gNB 120A or 120B) may comprise a base station central unit (CU) (*e.g.* gNB-CU 1420A or 1420B) and at least one base station distributed unit (DU) (*e.g.* gNB-DU 1430A, 1430B, 1430C, or 1430D) if a functional split is configured. Upper protocol layers of a base station may be located in a base station CU, and lower layers of the base station may be located in the base station DUs. An F1 interface (*e*.*g*. CU-DU interface) connecting a base station CU and base station DUs may be an ideal or non-ideal backhaul. F1-C may provide a control plane connection over an F1 interface, and F1-U may provide a user plane connection over the F1 interface. In an example, an Xn interface may be configured between base station CUs.

In an example, a base station CU may comprise an RRC function, an SDAP layer, and a PDCP layer, and base station DUs may comprise an RLC layer, a MAC layer, and a PHY layer. In an example, various functional split options between a base station CU and base station DUs may be possible by locating different combinations of upper protocol layers (RAN functions) in a base station CU and different combinations of lower protocol layers (RAN functions) in base station DUs. A functional split may support flexibility to move protocol layers between a base station CU and base station DUs depending on service requirements and/or network environments.

In an example, functional split options may be configured per base station, per base station CU, per base station DU, per UE, per bearer, per slice, or with other granularities. In per base station CU split, a base station CU may have a fixed split option, and base station DUs may be configured to match a split option of a base station CU. In per base station DU split, a base station DU may be configured with a different split option, and a base station CU may provide different split options for different base station DUs. In per UE split, a base station (base station CU and at least one base station DUs) may provide different split options for different wireless devices. In per bearer split, different split options may be utilized for different bearers. In per slice split, different split options may be applied for different slices.

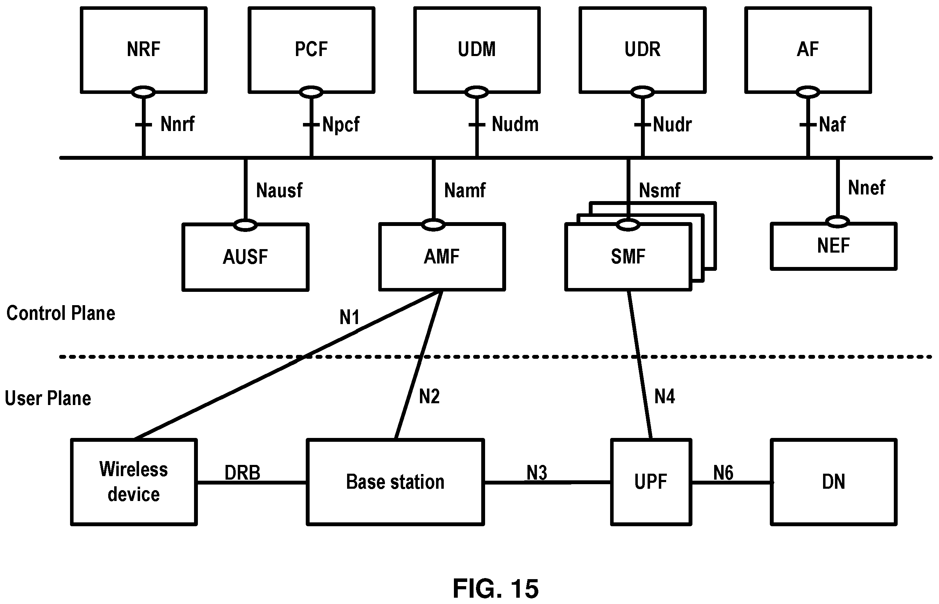

FIG. 15 illustrates a service-based architecture for a 5G network regarding a control plane (CP) and a user plane (UP) interaction. This illustration may depict logical connections between nodes and functions, and its illustrated connections may not be interpreted as direct physical connections. A wireless device may form a radio access network connection with a base station, which is connected to a User Plane (UP) Function (e.g. UPF) over a network interface providing a defined interface such as an N3 interface. The UPF may provide a logical connection to a data network (DN) over a network interface such as an N6 interface. The radio access network connection between the wireless device and the base station may be referred to as a data radio bearer (DRB).

The DN may be a data network used to provide an operator service, 3'rd party service such as the Internet, IP multimedia subsystem (IMS), augmented reality (AR), virtual reality (VR). In some embodiments DN may represent an edge computing network or resource, such as a mobile edge computing (MEC) network.

The wireless device also connects to the AMF through a logical N1 connection. The AMF may be responsible for authentication and authorization of access requests, as well as mobility management functions. The AMF may perform other roles and functions. In a service-based view, AMF may communicate with other core network control plane functions through a service-based interface denoted as Namf.

The SMF is a network function that may be responsible for the allocation and management of IP addresses that are assigned to a wireless device as well as the selection of a UPF for traffic associated with a particular session of the wireless device. There will be typically multiple SMFs in the network, each of which may be associated with a respective group of wireless devices, base stations or UPFs. The SMF may communicate with other core network functions, in a service based view, through a service based interface denoted as Nsmf. The SMF may also connect to a UPF through a logical interface such as network interface N4.

The authentication server function (AUSF) may provide authentication services to other network functions over a service based Nausf interface. A network exposure function (NEF) can be deployed in the network to allow servers, functions and other entities such as those outside a trusted domain (operator network) to have exposure to services and capabilities within the network. In one such example, the NEF may act like a proxy between an external application server (AS) outside the illustrated network and network functions such as the PCF, the SMF, the UDM and the AMF. The external AS may provide information that may be of use in the setup of the parameters associated with a data session. The NEF may communicate with other network functions through a service based Nnef network interface. The NEF may have an interface to non-3GPP functions.

The Network Repository Function (NRF) may provide network service discovery functionality. The NRF may be specific to the Public Land Mobility Network (PLMN) or network operator, with which it is associated. The service discovery functionality can allow network functions and wireless devices connected to the network to determine where and how to access existing network functions.

The PCF may communicate with other network functions over a service based Npcf interface, and may be used to provide policy and rules to other network functions, including those within the control plane. Enforcement and application of the policies and rules may not be the responsibility of the PCF. The responsibility of the functions to which the PCF transmits the policy may be responsibility of the AMF or the SMF. In one such example, the PCF may transmit policy associated with session management to the SMF. This may be used to allow for a unified policy framework with which network behavior can be governed.

The UDM may present a service based Nudm interface to communicate with other network functions. The UDM may provide data storage facilities to other network functions. Unified data storage may allow for a consolidated view of network information that may be used to ensure that the most relevant information can be made available to different network functions from a single resource. This may allow implementation of other network functions easier, as they may not need to determine where a particular type of data is stored in the network. The UDM may employ an interface, such as Nudr to connect to the UDR. The PCF may be associated with the UDM.

The PCF may have a direct interface to the UDR or may use Nudr interface to connection with UDR. The UDM may receive requests to retrieve content stored in the UDR, or requests to store content in the UDR. The UDM may be responsible for functionality such as the processing of credentials, location management and subscription management. The UDR may also support authentication credential processing, user identification handling, access authorization, registration/mobility management, subscription management, and short message service (SMS) management. The UDR may be responsible for storing data provided by the UDM. The stored data is associated with policy profile information (which may be provided by PCF) that governs the access rights to the stored data. In some embodiments, the UDR may store policy data, as well as user subscription data which may include any or all of subscription identifiers, security credentials, access and mobility related subscription data and session related data.

The Application Function (AF) may represent the non-data plane (also referred to as the non-user plane) functionality of an application deployed within a network operator domain and within a 3GPP compliant network. The AF may in internal application server (AS). The AF may interact with other core network functions through a service based Naf interface, and may access network capability exposure information, as well as provide application information for use in decisions such as traffic routing. The AF can also interact with functions such as the PCF to provide application specific input into policy and policy enforcement decisions. In many situations, the AF may not provide network services to other network functions. The AF may be often viewed as a consumer or user of services provided by other network functions. An application (application server) outside of the trusted domain (operator network), may perform many of the same functions as AF through the use of NEF.

The wireless device may communicate with network functions that are in the core network control plane (CN-UP), and the core network user plane (CN-CP). The UPF and the data network (DN) is a part of the CN-UP. The DN may be out of core network domain (cellular network domain). In the illustration (FIG. 15), base station locates in CP-UP side. The base station may provide connectivity both for the CN-CP & CN-UP. AMF, SMF, AUSF, NEF, NRF, PCF, and UDM may be functions that reside within the CN-CP 328, and are often referred to as control plane functions. If the AF resides in the trusted domain, the AF may communicate with other functions within CN-CP directly via the service based Naf interface. If the AF resides outside of the trusted domain, the AMF may communicate with other functions within CN-CP indirectly via the NEF.

In an example, a 5G network may support edge computing and may enable operators to host 3rd party services close to a wireless device's access point of attachment. The 5G core network may select a UPF close to the wireless device and may execute traffic steering from the UPF to the local data network via an N6 interface. In an example, the selection and traffic steering may be based on the wireless device's subscription data, wireless device location, the information from application function AF, policy, other related traffic rules, and/or the like. In an example, the 5G network may expose network information and capabilities to an edge computing application function. The functionality support for edge computing may include local routing where the 5G core network may select a UPF to route the user traffic to the local data network, traffic steering where the 5G core network may select the traffic to be routed to the applications in the local data network, session and service continuity to enable wireless device and application mobility, user plane selection and reselection, e.g. based on input from application function, network capability exposure where 5G core network and application function may provide information to each other via NEF, QoS and charging where PCF may provide rules for QoS control and charging for the traffic routed to the local data network, support of local area data network where 5G core network may provide support to connect to a local area data network (LADN) in a certain area where the applications are deployed, and/or the like.

In an example, mobile edge computing may be coordinated within a network using a local area data network (LADN). A wireless device may be allowed to access the LADN in a specific LADN service area, defined as, for example, a set of tracking areas. The specific LADN service area may be an area at which mobile edge applications are deployed. The specific LADN service area may be restricted to, for example, an area supported by one or more base stations. The specific LADN service area may be restricted to an area supported by, for example, one or more cells or types of cells of one or more base stations.

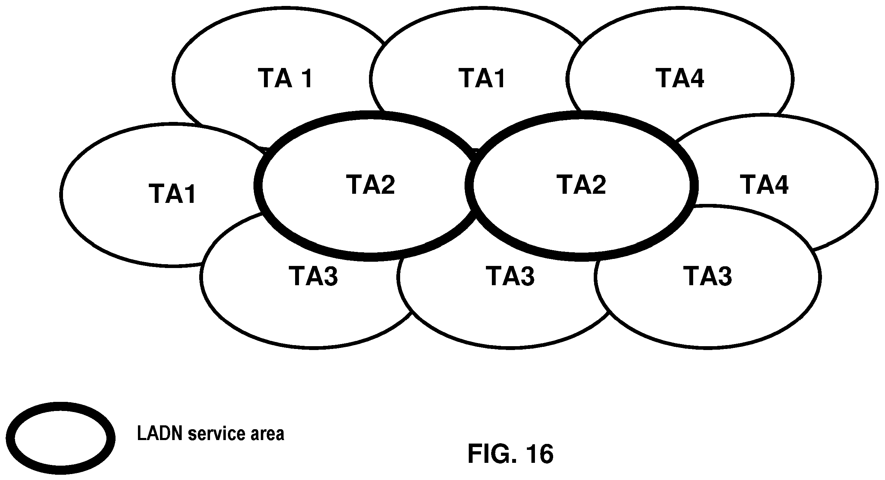

In an example, Local Area Data Network (LADN) may be to enable access to a data network (DN) in one or more specific area(s). In an example, outside of that area, a wireless device may be not able to access to the DNN. This may e.g. be used for special DNNs that are local to a stadium, a shopping center, a campus or similar. The area where the LADN DNN is available may be called a LADN service area and may be configured in the network as a set of tracking areas. FIG. 16 shows an example LADN service area (e.g., TA2). The list of tracking areas for a LADN DNN may be configured in the AMF. DNNs that are not using the LADN may not have a LADN service area and may not be restricted by the LADN service area. The LADN service area may be provided to the wireless when the wireless device registers. The wireless device may be thus aware of what area a LADN DNN is available and should not try to access that DNN when the wireless device is outside that area.

In existing technologies, a first base station may determine one or more second cells of a second base station to serve a wireless device. The one or more second cells of the second base station may, for example, supplement service provided one or more first cells of the first base station. To determine the one or more second cells of the second base station, the first base station may share information of the wireless device. For example, the first base station may identify one or more mobility restrictions of the wireless device (e.g., restrictions to cells of a particular network operator, registration area, tracking area, etc.). The second base station may identify the one or more second cells based on the mobility restrictions of the wireless device. The second base station may indicate parameters of the one or more second cells to the first base station (which may share them with the wireless device). The wireless device may proceed to obtain service via the one or more second cells of the second base station (which comply with the mobility restrictions of the wireless device). However, as the number of services expands, mobility restrictions of the wireless device may not suffice to facilitate identification of suitable cells. For example, a wireless device may establish different PDU sessions with different session-specific requirements. According to existing techniques, the second base station may provide parameters of one or more second cells which turn out to be suitable for the wireless device generally, but unsuitable for a particular PDU session associated with the wireless device. For example, the first base station may share information about mobility restrictions of the wireless device, and the second base station may provide parameters of one or more second cells that comply with the mobility restrictions, but do not comply with session-specific requirements of a PDU session of the wireless device. As a result, the wireless device may attempt and fail to use the one or more second cells to serve the PDU session. The user may not obtain the advantage of access via the one or more second cells, and may waste power and/or resources attempting to do so. Moreover, the signaling between the base stations (to identify the one or more second cells) will have been in vain.

Example embodiments may support coordination between base stations to account for session-specific requirements of a wireless device. For example, the base stations may share information relating to area restrictions for a PDU session of the wireless device. Example embodiments may support efficient determination and/or configuration, by a second base station, of one or more cells to serve a specific session of a wireless device. Example embodiments may reduce service interruption for sessions with specific requirements and increase signaling efficiency among network nodes.

In an example, a wireless device may be configured for dual-connectivity and/or multi-connectivity. To implement, for example, dual-connectivity, a master base station may ask a secondary base station to configure one or more secondary cells for the wireless device. However, existing mechanisms for configuration of secondary cells fail to account for complications that arise from edge computing. For example, the wireless device may establish a PDU session with an edge computing application. But the edge computing services provided by the application may only be available within a particular LADN service area. If the secondary base station configures cells that are outside of the LADN service area of the wireless device, then the wireless device may fail to connect to a user plane function (UPF) associated with the LADN. If the wireless device attempts to rely on the secondary cells to obtain the edge computing services, the connection may fail. As a result, edge computing service may be interrupted, resulting in inconvenience to the user of the wireless device (or injury in the case of critical applications). Alternatively, service interruption may be avoided by declining to use the secondary cells, but then the wireless device fails to obtain the advantages of multi-connectivity, and the network has wasted time and resources setting up the secondary cells. Accordingly, existing mechanisms for configuration of multi-connectivity need to be modified in order to account for the availability of edge computing.

Example embodiments may support coordination between base stations to account for the availability of edge computing to a wireless device. For example, the base stations may share information relating to edge computing requirements of the wireless device (e.g., service area restrictions and/or LADN information of the wireless device and/or a PDU session of the wireless device). Example embodiments may support efficient configuration, by a secondary base station, of secondary cells for a wireless device that implements edge computing. Example embodiments may reduce service interruption of edge computing services and increase signaling efficiency among network nodes.

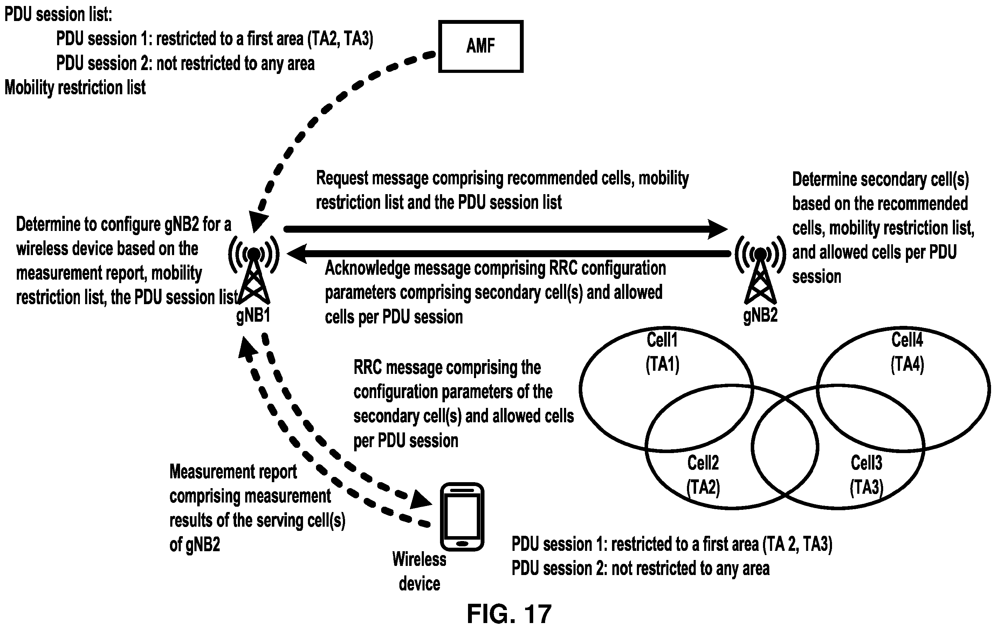

In an example, as shown in FIG. 17, a first base station (e.g., gNB, eNB, gNB1, eNB1, etc.) may serve a wireless device. The first base station may be connected to a second base station (e.g., gNB, eNB, gNB2, eNB2, etc.) via a direct interface (e.g., Xn interface, X2 interface, etc.). When the first base station is configured as a master base station (e.g., in dual-connectivity/multi-connectivity) for the wireless device, the first base station may provide for the wireless device (e.g., for communication with the wireless device) at least one of: a radio resource control (RRC) function; a service data adaptation protocol (SDAP) layer function; a packet data convergence protocol (PDCP) layer function; a radio link control layer (RLC) layer function; a medium access control (MAC) layer function; and/or a part of a physical layer function. When the second base station is configured as a secondary base station (e.g., in dual-connectivity/multi-connectivity) for the wireless device, the second base station may provide for the wireless device (e.g., for communication with the wireless device) at least one of: an RLC layer function; a MAC layer function; a physical layer function; and/or a part of a physical layer function.

The first base station may be connected to an access and mobility management function (AMF) via a direct control plane interface (e.g., N2 interface, S1 interface, S1-C, etc.) (e.g., for control plane connection), and/or may be connected to a user plane function (UPF) via a direct user plane interface (e.g., N3 interface, S1 interface, S1-U, etc.) (e.g., for user plane connection).

In an example, as shown in FIG. 17, the first base station (gNB1) may receive, from the wireless device, a measurement report comprising measurement results for one or more serving cells of the second base station. The first base station may determine, based on the measurement report, to configure the second base station as a secondary node (e.g., SgNB, SeNB, etc.) for the wireless device. The first base station may send, to the second base station and/or in response to the determining, a request message for a secondary node configuration for the wireless device. The request message may comprise a field indicating one or more packet data unit (PDU) sessions and restricted area for each PDU session. The restricted area may be associated with the one or more PDU session. The PDU session may be activated only inside the restricted area. In an example, the field may indicate that a first PDU session of the wireless device is restricted to a first area. The field may indicate that a second PDU session of the wireless device is not restricted to any area. The field may indicate that a third PDU session of the wireless device is restricted to a second area. The field may be a PDU session list. The first area and the second area may comprise one or more tracking areas, one or more registration areas, one or more radio access technologies, one or more public land mobile networks, one or more cells, and or the like. The first PDU session and the third PDU session may be a local area data network (LADN) PDU session. The first area may be a LADN service area of the first PDU session. The second area may be a LADN service area of the third PDU session. A PDU session which is restricted to an area may be a local area data network (LADN) PDU session. The PDU session restricted to an area may be associated with a LADN DNN.

In response to sending the request message, the first base station may receive an acknowledge message from the second base station. The acknowledge message may comprise radio resource control (RRC) configuration parameters and the RRC configuration parameters may be based on the request message. The RRC configuration parameters may indicate one or more cells for the first PDU session of the wireless device. The one or more cells may be allowed cells for the first PDU session. The one or more cells for the first PDU session may be cells among the first area. In response to receiving the acknowledge message, the first base station may send the RRC configuration parameters to a wireless device. The RRC configuration parameters may indicate the one or more cells (e.g., allowed cells) for the first PDU session of the wireless device. In an example, the RRC configuration parameters may be encapsulated in an RRC message (e.g., RRC reestablishment message, RRC setup request message).

In an example, the request message may indicate recommended cells for the secondary cell configuration. The recommended cells may be serving cells of the second base station. The recommended cells may be among the measurement report from the wireless device. The RRC configuration parameters may indicate a secondary cell group comprising one or more cells. The secondary cell group may be based on the recommended cells. The one or more cells of the first PDU session may be subset of the secondary cell group. In an example, the secondary cell group may be cell 1, cell 2, cell 3. The allowed cells for the first PDU session may be one or more cells of the cell 1, cell 2, cell 3.

In an example, the request message may indicate mobility restriction list of the wireless device. The secondary cell group may be further based on the mobility restrictions. In an example, the one or more cells of the secondary cell group may not be restricted to access by the mobility restriction list. The mobility restriction list may indicate roaming or access restrictions for subsequent mobility action for which a base station provides information about the target of the mobility action for a wireless device, e.g., handover, or for secondary cell group selection during dual connectivity operations. In an example, the mobility restriction list indicates that the wireless device is not allowed to access a specific tracking area (e.g., TA1), any cells associated with the TA1 (e.g., any cells broadcasting the TA1) may be excluded for the secondary cell group. The mobility restriction list may comprise equivalent PLMNs, RAT restrictions, forbidden area information, service area information, core network type restriction and/or the like. The equivalent PLMNs may indicate allowed PLMN in addition to a serving PLMN. The RAT restrictions may indicate a RAT (e.g., e-UTRA, NR, UTRA, GSM) which is not allowed to access by the wireless device. The forbidden area information may indicate one or more tracking areas which are forbidden to access by the wireless device. The service area information may comprise allowed tracking area codes and/ not allowed tracking area codes. In an example, the cell broadcast the allowed tracking area may be allowed to access by the wireless device. The cell broadcast the not allowed tracking area may be not allowed to access by the wireless device. The core network type restriction may indicate a core network type (e.g., EPC, 5GC) which is not allowed to access by the wireless device.

In an example, the second base station (e.g., gNB2) may receive the request message from the first base station, requesting a secondary node configuration for the wireless device. In response to receiving the request message, the second base station may select secondary cell group for the wireless device and one or more allowed cells for each PDU sessions. The selection/selecting may be based on the PDU session list, the recommended cells, the mobility restriction list. The second base station may select the secondary cell group based on the recommended cells. The second base station may select the secondary cell group based on the mobility restriction list and/or the PDU session list (e.g., restricted area information). The second base station may select the allowed cells for PDU session based on the restriction area information. The second base station may not select a cell as the secondary cell group, if the cell is restricted to access by the wireless device based on the mobility restriction list. The second base station may select allowed cells for each PDU session based one the restricted area of the PDU session. In an example, the first PDU session of the PDU session list may be restricted to the first area.

In an example (referring to FIG. 17), the first area may comprise TA2, TA3. The first PDU session may be valid/activated if the PDU session is established via the first area. The second base station may select a cell (e.g., cell 2/TA 2) of the first area as the allowed cells for the first PDU session. The second base station may not select a second cell (e.g., cell 1/TA1) which is outside of the first area as the allowed cells for the first PDU session. The allowed cells may be subset of the secondary cell group. In an example, the first PDU session may be activated only inside the first area.

In an example, the second base station may send an acknowledge message to the first base station. The send/sending may be based on the reception of the request message and/or the selection/selecting. The acknowledge message may comprise RRC configuration parameters (e.g., configuration parameters) comprising the allowed cells per PDU session. The RRC configuration parameters comprise allowed cells for the first PDU session, allowed cells for the second PDU session, allowed cells for the third PDU session. The RRC configuration parameters may comprise the secondary cell group. The allowed cells for the first PDU session, allowed cells for the second PDU session, allowed cells for the third PDU session may be subset of the secondary cell group.

The second base station may select allowed cells for a PDU session based on validity of a PDU session area.

This is example embodiment may allow that the second base station select a cell inside of a service area of a PDU session. This example embodiment may increase service continuity of the PDU session which is restricted to a service area. This may decrease a service interruption of a PDU session which is restricted to a service area. This may decrease a service interruption of a LADN PDU session which is restricted to a LADN service area.

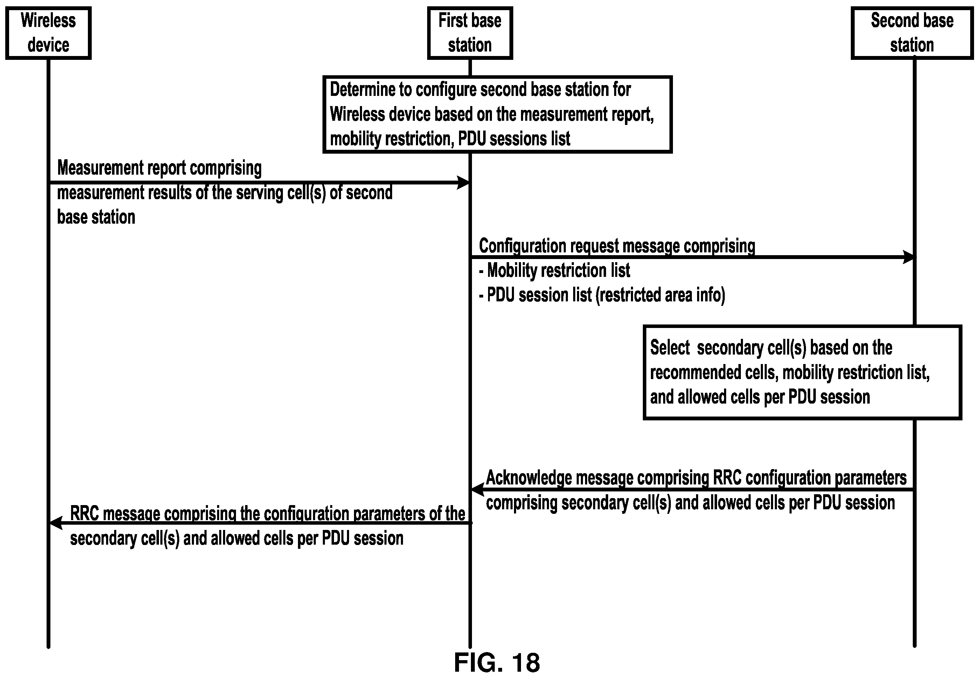

FIG. 18 illustrates an example signaling flow as part of the example embodiment between the wireless device, the first base station, the second base station. In an example, the wireless device may send a measurement report comprising measurement result of the serving cells of a second base station. The first base station may determine, based on the measurement report, to configure the second base station as a secondary node. In an example, the first base station may be a serving base station of the wireless device. The first base station a master base station for dual connectivity operation. The second base station may be a secondary base station for the dual connectivity operation.

The first base station, based on the determination, may send a request message (e.g., configuration request message) for a secondary node configuration for the wireless device. The request message may comprise recommended cells, mobility restriction list, PDU session list of the wireless device. The recommended cells may be cells for secondary cell group candidate and based on the measurement result. The mobility restriction list explained in above. The PDU session list may comprise one or more PDU session identity and associated restricted area for each PDU session identity. The restricted area may be a LADN service area. The service of the PDU session may be valid inside of the restricted area. The second base station may receive the request message. The second base station may select a secondary cell group based on the request message. The second base station may select allowed cells for each PDU session based on the request message. The second base station may select allowed cells for each PDU session based on the associated restricted area with the PDU session. The second base station may send an acknowledge message, in response to the selecting, to the first base station. The acknowledge message may comprise RRC configuration parameters, the RRC configuration parameters comprising the secondary cell group and the allowed cells per each PDU session. The first base station may receive the acknowledgement message. In response to receiving the acknowledgement message, the first base station may send an RRC message to the wireless device. The RRC message may comprise the RRC configuration parameters.

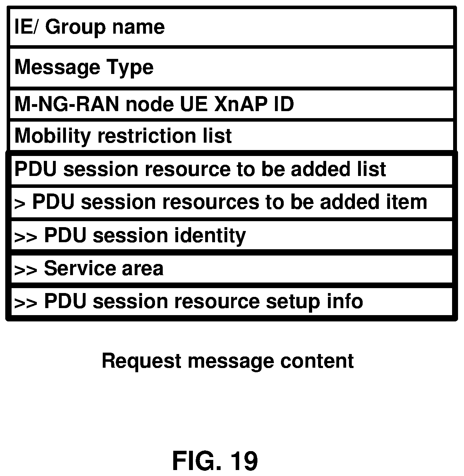

FIG. 19 shows example message format of the request message. The request message may be secondary node addition request message, secondary node modification request message. In an example, the message type may indicate the secondary node addition request message or the secondary node modification request message. The M-NG-RAN node UE XnAP ID may identify a wireless device over an Xn interface between base stations. The mobility restriction list may be used when a secondary base station selects a secondary cell group. The PDU session resource to be added list may comprise PDU session resources to be added item. The PDU session resource to be added list may indicate PDU session list which the servng base station request to activate dual connectivity operation. The PDU session resource to be added list may be the PDU session list. The PDU session resource to be added list may comprise the PDU session identity of a PDU session, service area and PDU session resource setup information for the PDU session. The service area may be the restricted area. The service area may be the LADN service area. The service area may comprise one or more tracking area identities (e.g., tracking area codes of the tracking area identities).

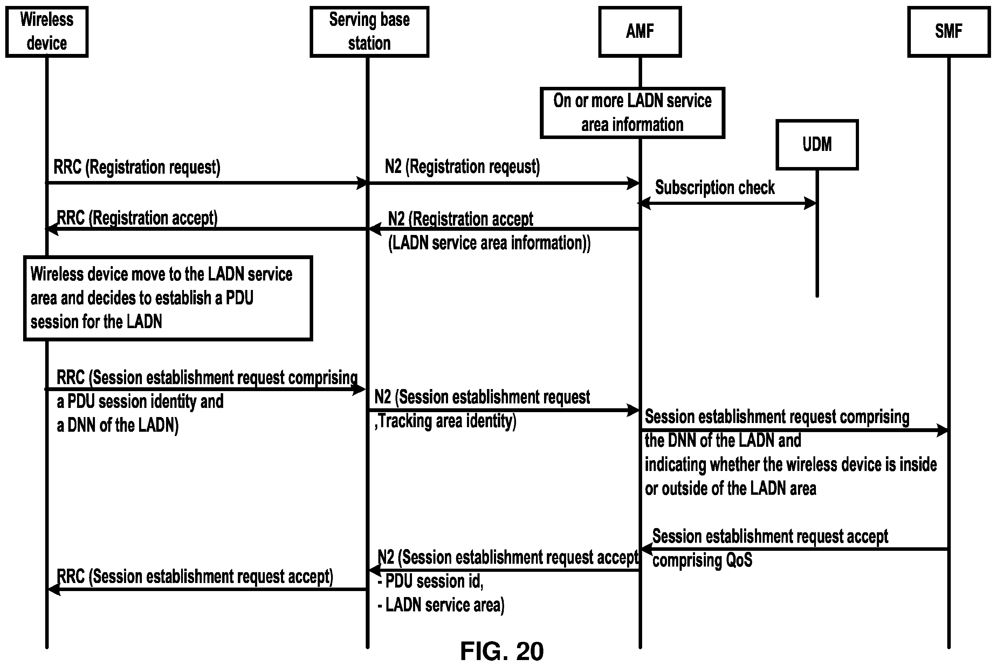

Referring to FIG, 17 again, the first base station may receive PDU sessions lists and/or mobility restriction list. The first base station may receive the PDU session list and the mobility restriction list from an AMF or a neighbor base station as explained in (FIG. 20).

FIG. 20 show how the first base station (e.g., serving base station) receives the PDU session list (e.g., restricted area information for the first PDU session). An access and mobility management function (AMF) may be aware LADN service area information of serving areas of the AMF. The LADN service area information may be pre-configured to the AMF by an operator. The LADN service area information may be configured by a network node (e.g., NEF) and provided by a 3'rd party operator. The LADN service area information may comprise one or more LADN DNNs and associated LADN service area. The LADN service area may comprise one or more tracking area identities.

In an example, the wireless device may send a registration request message to the AMF via the serving base station, requesting a registration or re-registration with the AMF. The registration request message from the wireless device to the serving base station may be encapsulated to a radio resource control (RRC) message. The serving base station may send a N2 message to the AMF in response to the receiving the RRC message. The N2 message may comprise the registration request message. The N2 message may be an initial UE message. If the AMF is configured with one or more LADN DNNs, the AMF may query to a user data management function (UDM) whether the wireless device is allowed to use the one or more LADN DNNs. If the wireless device is allowed to use the one or more DNNs, the AMF may include the LADN service area information (e.g., DNN and associated tracking area identities) into a registration accept message. The AMF may send the registration accept message comprising the LADN service area information, in response to the registration request, to the wireless device via the serving base station. The wireless device may receive the registration accept message comprising the LADN service area information. The wireless device may store/configure the LADN service area information. The wireless device may monitor whether the wireless device enters any LADN service area associated with the LADN service area information. In an example, the LADN service area information may comprise DNN1 and associated tracking identities (e.g., TA 100, TA 101). If the wireless device enters an LADN service area of the DNN 1 (e.g. TA 100, TA 101), the wireless device may display to a screen of the wireless device. A user (e.g., person) of the wireless device may select the displayed DNN 1 or a service associated with the DNN 1.

If the user selects the DNN 1 or a service associated with the DNN 1, the wireless device may request a packet data unit (PDU) session establishment of the DNN 1. In an example, the DNN 1 may be a LADN DNN. The wireless device may send a session establishment request message, in response to the request, to the SMF. The wireless device may send the session establishment request message via a cell of the service base station and the AMF to the SMF. The session establishment request message (e.g., a PDU session establishment request message) may comprise a PDU session identity and a DNN (e.g., DNN1, LADN DNN). In response to receiving the session establishment request from the wireless device, the serving base station may send a N2 message to the AMF. The N2 message may comprise the session establishment request message and a tracking area identity of the cell (e.g., TA 100). The AMF may receive the N2 message from the service base station. If a DNN of the session establishment request message is a LADN DNN (e.g. the DNN is area restricted DNN), the AMF may check whether the wireless device is inside of the LADN service area. In an example, the tracking area identity of the cell (e.g., TA 100) may be in the LADN service area of the DNN 1 (e.g., TA 100, TA 101). If the wireless device is inside of the LADN service area, the AMF may indicate to the SMF along with sending session establishment request message in response to receiving the N2 message from the service base station. The SMF may receive the session establishment request message comprising the DNN (e.g., DNN 1) and the indication. The SMF may not accept the session establishment request if the wireless device is outside of the LADN service area. Based on the indication (e.g., the wireless device is inside of the LADN service area), the AMF may send a session establishment request accept message to the wireless device. The SMF may send the session establishment request accept message to the wireless device via the AMF and the serving base station. The AMF may receive the session establishment request accept message from the SMF, in response to the session establishment request. The AMF may send a N2 message to the serving base station, in response to receiving the session establishment request accept message from the SMF. The N2 message may comprise the session establishment request accept message, a PDU session identity of the established PDU session, the LADN service area (e.g., TA 100, TA 101). In response to receiving the N2 message, the sering base station may forward the session establishment request accept message to the wireless device. The N2 message may be encapsulated into an RRC message. The serving base station may store the PDU session identity and the associated LADN service area. The associated LADN service area information (e.g., PDU session identity and area information (e.g., LADN service area) may be transferred to neighbor base station during handover procedure.

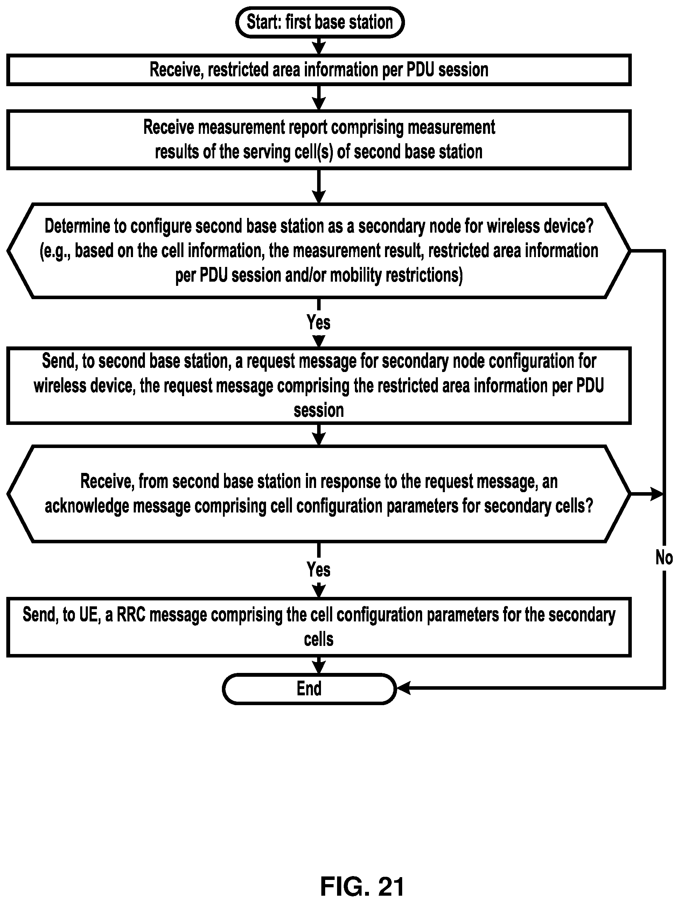

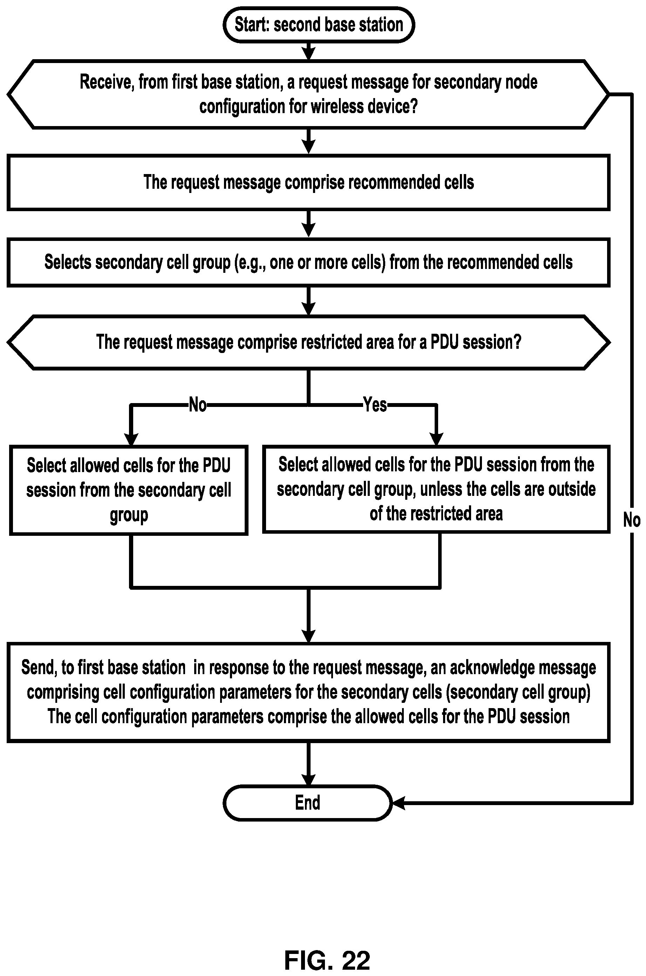

FIG. 21, FIG. 22 shows flowcharts of the first base station and the second base station. In FIG. 21, the first base station may receive restricted area information per PDU session. A PDU session is associated with a service area (e.g., restricted area) and may be a LADN PDU session. A PDU session is not associated with a service area may be a non-LADN PDU session. The first base station may receive measurement report comprising measurement result. The measurement result may comprise serving cells of the second base station. The first base station may determine to configure second base station as a secondary node for a wireless device. the determination may be based on cell information, the measurement result, the restricted area information per PDU session and/or mobility restriction list. If the first base station determines to configure the second base station as a secondary node for the wireless device, the first base station may send to the second base station, a request message for a secondary node configuration for the wireless device. The request message may comprise the restricted area information per PDU session. The request message may further comprise recommended cells for the secondary node addition and/or mobility restriction list of the wireless device. In response to the sending, the first base station may receive from the second base station, an acknowledge message comprising cell configuration parameters for secondary cells. The first base station may send an RRC message comprising the cell configuration parameters for the secondary cells.

In FIG.22, the second base station may receive from the first base station, a request message for a secondary node configuration for a wireless device. The request message may comprise recommended cells. The second base station may select one or more cells as a secondary cell group from the recommended cells. The request message may comprise restricted area information for a PDU session. If the PDU session is not associated with a restricted area, the second base station may select one or more cells as allowed cells for the PDU session from the secondary cell group. If the PDU session is associated with a restricted area, the second base station may select one or more cells as allowed cells for the PDU session based on the secondary cell group and the restricted area. In an example, the one or more cells may be from the secondary cell group and the one or more cells may be inside the restricted area. The second base station may select allowed cells for the PDU session from the secondary cell group unless the cells are outside of the restricted area. In response to the selection, the second base station may send an acknowledge message to the first base station to respond to the request message. The acknowledge message may comprise cell configuration parameters for the secondary cells (e.g., secondary cell group). The cell configuration parameters may comprise the allowed cells for the PDU session (e.g., one or more DRB bearers associated with the PDU session) and the secondary cell group.

In an example, the request message may comprise at least one of: an identifier (e.g., UE XnAP identifier, UE F1AP identifier, TMSI, IMSI, etc.), a cell identifier (e.g., cell index, global cell identifier, CGI, physical cell identifier, PCI, etc.) of a cell of the one or more serving cells; and/or the like. The request message may comprise an identifier of a target secondary cell (e.g., or a target cell) comprising at least one of: a primary cell (PCell), a primary secondary cell (PSCell); a special cell (SpCell); a secondary cell; and/or the like. The request message may comprise recommended RRC configuration parameters determined by the first base station (e.g., or the base station central unit).

The request message may comprise bearer configuration parameters of one or more bearers. The bearer configuration parameters may comprise parameters for a bearer of the one or more bearers, the parameters comprising at least one of: a bearer identifier, an uplink tunnel endpoint identifier, QoS information (e.g., QCI, 5QI, ARP, priority information, etc.), PDCP duplication configuration parameters, PDCP duplication activation/deactivation indication, RLC mode, QoS flow configuration parameters, PDU session configuration parameters, and/or the like.

In an example, the acknowledge message and/or the cell configuration parameters may comprise RRC configuration parameters (e.g., RLC/MAC/physical layer parameters) for the wireless device.

In an example, based on the acknowledge message and/or in response to receiving the acknowledge message, the first base station (e.g., or the base station central unit) may transmit/send, to the wireless device, an RRC message comprising the cell configuration parameters of the secondary cell group. The RRC message may comprise allowed cells for one or more bearers. In an example, PDU session may be associated with one or more bearers. The bearer may be DRB bearer. PDU session may comprise one or more QoS flows. The association between the PDU session and the one or more bearers may be determined by the serving base station based on local policy and/or the QoS flows. One PDU session may be associated with one DRB bearer. One PDU session may be associated with one or more DRB bearers. The second base station may determine the allowed cells for one or more DRB bearers for the PDU session. In an example, the first PDU session may be restricted to the first area. The PDU session may be associated with 2 DRB bearers. The second base station may select allowed cells for the 2 DRB bearers based on the first area (e.g., restricted area, LADN service area).

The first RRC message may comprise the RRC configuration parameters for the wireless device. The first RRC message may comprise at least one of: RRC reconfiguration message, RRC reestablishment message, RRC setup message, RRC resume message, and/or the like.

In an example, the first RRC message may comprise at least one of: cell configuration parameters of the one or more secondary cells (e.g., or the one or more cells); bearer configuration parameters of a bearer; and/or the like.

In an example, the first RRC message may comprise at least one of: a UE identifier (e.g., TMSI, C-RNTI, IMSI, S-TMSI, IMEI, etc.) of the wireless device, a cell identifier (e.g., physical cell identifier, PCI, global cell identifier, GCI, CGI, cell index, etc.) for the wireless device, cell information (e.g., cell index, cell group configuration, radio link failure timers and constants, RLM in-sync/out-of-sync threshold, reconfiguration with sync comprising t304 value, RACH configuration parameters comprising a preamble index and/or RACH resources, carrier frequency information, bandwidth part configuration parameters, beam configuration parameters of SS beam and/or CSI-RS beam, transmission power configuration parameter comprising p-MAX/p-MgNB/p-SgNB, and/or the like) of one or more serving cells (e.g., the one or more cells) for the wireless device, a bearer identifier of the bearer associated with a service for the wireless device, a logical channel identifier (index) of the bearer, a PDU session identifier of (e.g., associated with) the bearer, a QoS flow identifier of the bearer, a network slice information (e.g., S-NSSAI, NSSAI) for a network slice (e.g., the first network slice) associated with the bearer and/or the service, an identifier of a network (e.g., the first NPN), and/or the like. In an example, the service associated with the bearer may comprise at least one of a voice, an ultra-reliable and low-latency communication (URLLC), a vehicle-to-everything (V2X) (e.g., V2I, V2V, V2P, etc.), an emergency service, and/or the like. In an example, the service associated with the bearer may comprise at least one of a delay tolerant service, an Internet-of-things (IoT) service,

In an example, the first RRC message may comprise at least one of an rrc-transactionidentifier information element (IE), a radio resource configuration dedicated IE comprising one or more radio resource configuration parameters, measurement configuration parameters, mobility control information parameters, one or more NAS layer parameters, security parameters, antenna information parameters, secondary cell addition/modification parameters, secondary cell release parameters, WLAN configuration parameters, WLAN offloading configuration parameters, LWA configuration parameters, LWIP configuration parameters, RCLWI configuration parameters, sidelink configuration parameters, V2X configuration parameters, uplink transmission power configuration parameters (e.g. p-MAX, p-MeNB, p-SeNB), a power control mode information element, secondary cell group configuration parameters, and/or the like.

In an example, the first base station (e.g., or the base station central unit) may receive, from the wireless device, a second RRC message indicating successful completion of applying/configuring the cell configuration parameters for the one or more secondary cells and the allowed cells for each bearers

In an example, the first base station may be a master base station of the wireless device. The first base station may provide for the wireless device (e.g., for communication with the wireless device) at least one of: a radio resource control (RRC) function; a service data adaptation protocol (SDAP) layer function; a packet data convergence protocol (PDCP) layer function; a radio link control layer (RLC) function; a medium access control (MAC) layer function; and/or a part of a physical layer function. In an example, the second base station may a secondary base station of the wireless device. The second base station may provide for the wireless device at least one of: an RLC layer function; a MAC layer function; a physical layer function; and/or a part of a physical layer function.

In an example, the first base station may receive, from the wireless device, the measurement report via an RRC message. The measurement report may comprise at least one of: a cell identifier of a cell of the one or more serving cells; an identifier of a CAG associated with a cell of the one or more serving cells; and/or an information field indicating whether a cell of the one or more serving cells is a hybrid cell or a closed cell for a CAG. The measurement report may comprise at least one of: a reference signal received power (RSRP) of the one or more serving cells; and/or a reference signal received quality (RSRQ) of the one or more serving cells.

Embodiments may be configured to operate as needed. The disclosed mechanism may be performed when certain criteria are met, for example, in a wireless device, a base station, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

In an example, a first base station may send to a second base station, a request message requesting a secondary node configuration for a wireless device. The request message may indicate that a first packet data unit (PDU) session is restricted to a first area. The first base station may receive from the second base station, an acknowledge message comprising radio resource control configuration parameters based on the request message. The base station may send to the wireless device, the radio resource control (RRC) configuration parameters.

The first base station may receive from an access and mobility management function (AMF), a setup message indicating that the first PDU session is restricted to the first area.

The request message may indicate that a second PDU session is not restricted to the first area. The request message may indicate that a third PDU session is restricted to a second area. The first area comprises at least one of one or more tracking areas, one or more registration areas, one or more radio access technologies, one or more public land mobile networks, one or more cells and/or the like.

The RRC configuration parameters may indicate one or more cells for the first PDU session of the wireless device. The RRC configuration parameters may indicate a secondary cell group for the wireless device. The one or more cells for the first PDU session may be a subset of the secondary cell group.

The first PDU session is a local area data network (LADN) PDU session. The first PDU session may be associated with a LADN DNN.

The first base station may receive from a third base station, a handover request message requesting handover of the wireless device. The handover request may indicate that the first PDU session is restricted to the first area.

The request message may further indicate that a mobility of the wireless device is restricted to a mobility restriction list. Cells of the secondary cell group may be allowed to access for the wireless device based on the mobility restriction list. The mobility restriction list may comprise radio access technology (RAT) restriction information, forbidden area information, allowed area, non-allowed area, core network type restriction information, closed access group information, and/or the like.

In an example, the second base station may receive from a first base station, a message requesting a secondary node configuration for a wireless device. The message may comprise a packet data unit (PDU) session identity indicating a PDU session of the wireless device and a list of one or more tracking area identities associated with the PDU session. The second base station may determine one or more cells for the PDU session. The determination may be based on the list. The second base station may send to the first base station, a second message comprising a secondary cell group. The secondary cell group comprises the one or more cells.

In an example, a second base station may receive from a first base station, a request message requesting a secondary node configuration for a wireless device. The request message may indicate mobility restriction list of the wireless device and a first packet data unit (PDU) session is restricted to a first area. The second base station may select based on the request message, secondary cell group for the wireless device and one or more cells for the first PDU session of the wireless device. The second base station may send to the base station, an acknowledgement message comprising radio resource control (RRC) configuration parameters. The RRC configuration parameters may comprise the secondary cell group and the one or more cells for the first PDU session. The one or more cells for the first PDU session may be a subset of the secondary cell group.

The second base station may select the secondary cell group based on the mobility restriction list. The request message may further indicate recommended cells for the secondary node configuration. The second base station may select cells for the secondary cell group based on the cells not being restricted by the mobility restricted area information; and the cells being in the recommended cells.

The one or more cells for the first PDU session may be restricted to the first area. The one or more cells for the first PDU session may be not overlapped with in the first area.

The request message may indicate that a second PDU session is not restricted to the first area. One or more cells for the second PDU session may be not restricted to the first area.

The one or more cells for the second PDU session may be a subset of the secondary cell group.

The request message may indicate that a third PDU session is restricted to a second area. One or more cells for the third PDU session may be restricted to the second area.

The PDU session may be a local area data network (LADN) PDU session. The PDU session may be associated with a LADN data network (DN). An access to the LADN DN may be available in a LADN service area. The LADN service area may the first area. The wireless device may have subscription to the LADN DN.

The first PDU session may be released if the first PDU session may be via a cell out of the first area.

In an example, the second base station may receive from a first base station, a message requesting a secondary node configuration for a wireless device. The message may indicate that a first packet data unit (PDU) session is restricted to a first area. The second base station may send to the first base station, a radio resource control (RRC) configuration parameters comprising one or more cells for the first PDU session. The one or more cells may be determined based on the first area. The one or more cells may be inside of the first area. The first PDU session may be a local area data network (LADN) PDU session. The first PDU session may be associated with a LADN DN. An access to the LADN DN may be available in a LADN service area. An access to the LADN DN may not be available outside of the LADN service area. The first base station may be a master base station. The second base station may be a secondary base station.

The message may indicate recommended cells for a secondary cell group. The RRC configuration parameters may comprise the secondary cell group. The second base station may select one or more cells for the secondary cell group based on the one or more cells for the secondary cell group being in the recommended cells for the secondary cell group; and load status of the recommended cells for the secondary cell group.

The message further may indicate mobility restricted area information of the wireless device. The second base station may select the one or more cells for the secondary cell group may be further based on the mobility restricted area information. The one or more cells may be allowed to access by the wireless device based on the mobility restricted area information.

The one or more cells for the first PDU session may be a subset of the secondary cell group.

A base station may communicate with a mix of wireless devices. Wireless devices and/or base stations may support multiple technologies, and/or multiple releases of the same technology. Wireless devices may have some specific capability(ies) depending on wireless device category and/or capability(ies). A base station may comprise multiple sectors. When this disclosure refers to a base station communicating with a plurality of wireless devices, this disclosure may refer to a subset of the total wireless devices in a coverage area. This disclosure may refer to, for example, a plurality of wireless devices of a given LTE or 5G release with a given capability and in a given sector of the base station. The plurality of wireless devices in this disclosure may refer to a selected plurality of wireless devices, and/or a subset of total wireless devices in a coverage area which perform according to disclosed methods, and/or the like. There may be a plurality of base stations or a plurality of wireless devices in a coverage area that may not comply with the disclosed methods, for example, because those wireless devices or base stations perform based on older releases of LTE or 5G technology.

In this disclosure, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed to one or more of the various embodiments.

If A and B are sets and every element of A is also an element of B, A is called a subset of B. In this specification, only non-empty sets and subsets are considered. For example, possible subsets of B = {cell1, cell2} are: {cell1}, {cell2}, and {cell1, cell2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may also refer to specific settings in a device that effect the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, various embodiments are disclosed. Limitations, features, and/or elements from the disclosed example embodiments may be combined, within the scope of the claims, to create further embodiments.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages comprise a plurality of parameters, it implies that a parameter in the plurality of parameters is in at least one of the one or more messages, but does not have to be in each of the one or more messages.

Furthermore, many features presented above are described as being optional through the use of "may" or the use of parentheses. For the sake of brevity and legibility, the present disclosure does not explicitly recite each and every permutation that may be obtained by choosing from the set of optional features. However, the present disclosure is to be interpreted as explicitly disclosing all such permutations that fall within the scope of the appended claims. For example, a system described as having three optional features may be embodied in seven different ways, namely with just one of the three possible features, with any two of the three possible features or with all three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (i.e. hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally, it may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The above mentioned technologies are often used in combination to achieve the result of a functional module.

While various embodiments have been described above, it should be understood that they have been presented by way of example, and not limitation. It will be apparent to persons skilled in the relevant art(s) that various changes in form and detail can be made therein, within the scope of the claims, to obtain further embodiments. In fact, after reading the above description, it will be apparent to one skilled in the relevant art(s) how to implement alternative embodiments. Thus, the present embodiments should not be limited by any of the above described exemplary embodiments.

In addition, it should be understood that any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

## Claims

1. A method comprising:
receiving, by a second base station from a first base station, a message indicating that a packet data unit, PDU, session of a wireless device is allowed in an area;
sending, by the second base station to the first base station in response to the message, radio resource control, RRC, configuration parameters of one or more cells determined based on the area.

2. The method of claim 1, wherein the one or more cells are for dual connectivity of the wireless device.

3. The method of claim 1 or 2, wherein the one or more cells belong to a secondary cell group.

4. The method of any of claims 1 to 3, further comprising selecting, by the second base station, the one or more cells based on the one or more cells being associated with the area.

5. The method of any of claims 1 to 4, wherein the area is one or more of:
a registration area;
a radio access technology;
a public land mobile network, PLMN;
a cell;
a tracking area; and
a local area data network, LADN, service area.

6. A second base station comprising one or more processors and memory storing instructions that when executed by the one or more processors, cause the second base station to perform the method of any of claims 1 to 5.

7. A non-transitory computer-readable medium comprising instructions that, when executed by one or more processors of a second base station, cause the second base station to perform the method of any of claims 1 to 5.

8. A method comprising:
sending, by a first base station to a second base station, a message indicating that a packet data unit, PDU, session of a wireless device is allowed in an area;
receiving, by the first base station from the second base station in response to the message, radio resource control, RRC, configuration parameters of one or more cells determined based on the area.

9. The method of claim 8, wherein the one or more cells are for dual connectivity of the wireless device.

10. The method of claim 8 or 9, wherein the one or more cells belong to a secondary cell group.

11. The method of any of claims 8 to 10, further comprising receiving, by the first base station from an access and mobility management function, AMF, a setup message indicating that the PDU session is allowed in the area.

12. The method of any of claims 8 to 11, wherein the area is one or more of:
a registration area;
a radio access technology;
a public land mobile network, PLMN;
a cell;
a tracking area; and
a local area data network, LADN, service area.

13. A first base station comprising one or more processors and memory storing instructions that, when executed by the one or more processors, cause the first base station to perform the method of any of claims 8 to 12.

14. A non-transitory computer-readable medium comprising instructions that, when executed by one or more processors of a first base station, cause the first base station to perform the method of any of claims 8 to 12.

15. A system, comprising:
a first base station comprising: one or more processors and memory storing instructions that, when executed by the one or more processors, cause the first base station to:
send a message indicating that a packet data unit, PDU, session of a wireless device is allowed in an area; and
receive radio resource control, RRC, configuration parameters of one or more cells determined based on the area;
a second base station comprising: one or more processors and memory storing instructions that, when executed by the one or more processors, cause the second base station to:
receive the message from the first base station; and
send the RRC configuration parameters to the first base station in response to the message.

## Patentansprüche

1. Verfahren, umfassend:
Empfangen einer Nachricht, die angibt, dass eine Paketdateneinheit-(Packet Data Unit, PDU)-Sitzung einer drahtlosen Vorrichtung in einem Bereich zulässig ist, durch eine zweite Basisstation von einer ersten Basisstation;
Senden der Funkressourcensteuerung (Radio Resource Control, RRC)-Konfigurationsparameter einer oder mehrerer Zellen, die basierend auf dem Bereich bestimmt werden, durch die zweite Basisstation an die erste Basisstation als Reaktion auf die Nachricht.

2. Verfahren nach Anspruch 1, wobei die eine oder mehreren Zellen für die duale Konnektivität der drahtlosen Vorrichtung vorgesehen sind.

3. Verfahren nach Anspruch 1 oder 2, wobei die eine oder mehreren Zellen zu einer sekundären Zellgruppe gehören.

4. Verfahren nach einem der Ansprüche 1 bis 3, ferner umfassend das Auswählen der einen oder mehreren Zellen durch die zweite Basisstation basierend auf den einer oder mehreren Zellen, die dem Bereich zugeordnet sind.

5. Verfahren nach einem der Ansprüche 1 bis 4, wobei der Bereich einer oder mehrere der folgenden ist:
ein Registrierungsbereich;
eine Funkzugangstechnologie;
ein öffentliches Landmobilfunknetz (Public Land Mobile Network, PLMN) ;
eine Zelle;
ein Verfolgungsbereich; und
ein lokales Datennetzwerk-(Local Area Data Network, LADN)-Servicebereich.

6. Zweite Basisstation, umfassend einen oder mehrere Prozessoren und einen Speicher, der Anweisungen speichert, die, wenn sie von dem einen oder den mehreren Prozessoren ausgeführt werden, die zweite Basisstation veranlassen, das Verfahren nach einem der Ansprüche 1 bis 5 auszuführen.

7. Nichtflüchtiges, computerlesbares Medium, das Anweisungen umfasst, die, wenn sie von einem oder mehreren Prozessoren einer zweiten Basisstation ausgeführt werden, die zweite Basisstation veranlassen, das Verfahren nach einem der Ansprüche 1 bis 5 auszuführen.

8. Verfahren, umfassend:
Senden einer Nachricht, die angibt, dass eine Paketdateneinheit-(Packet Data Unit, PDU)-Sitzung einer drahtlosen Vorrichtung in einem Bereich zulässig ist, durch eine erste Basisstation an eine zweite Basisstation;
Empfangen durch die erste Basisstation von der zweiten Basisstation als Reaktion auf die Nachricht, Funkressourcensteuerung (Radio Resource Control, RRC)-Konfigurationsparameter einer oder mehrerer Zellen, die basierend auf dem Bereich bestimmt werden.

9. Verfahren nach Anspruch 8, wobei die eine oder mehreren Zellen für die duale Konnektivität der drahtlosen Vorrichtung vorgesehen sind.

10. Verfahren nach Anspruch 8 oder 9, wobei die eine oder mehreren Zellen zu einer sekundären Zellgruppe gehören.

11. Verfahren nach einem der Ansprüche 8 bis 10, ferner umfassend das Empfangen einer Setup-Nachricht durch die erste Basisstation von einer Zugangs- und Mobilitätsmanagementfunktion (Access and Mobility Management Function, AMF), die angibt, dass die PDU-Sitzung in dem Bereich zulässig ist.

12. Verfahren nach einem der Ansprüche 8 bis 11, wobei der Bereich einer oder mehrere der folgenden ist:
ein Registrierungsbereich;
eine Funkzugangstechnologie;
ein öffentliches Landmobilfunknetz (Public Land Mobile Network, PLMN) ;
eine Zelle;
ein Verfolgungsbereich; und
ein lokales Datennetzwerk-(Local Area Data Network, LADN)-Servicebereich.

13. Erste Basisstation, umfassend einen oder mehrere Prozessoren und einen Speicher, der Anweisungen speichert, die, wenn sie von dem einen oder den mehreren Prozessoren ausgeführt werden, die erste Basisstation veranlassen, das Verfahren nach einem der Ansprüche 8 bis 12 auszuführen.

14. Nichtflüchtiges, computerlesbares Medium, das Anweisungen umfasst, die, wenn sie von einem oder mehreren Prozessoren einer ersten Basisstation ausgeführt werden, die erste Basisstation veranlassen, das Verfahren nach einem der Ansprüche 8 bis 12 auszuführen.

15. System, umfassend:
eine erste Basisstation, umfassend: einen oder mehrere Prozessoren und einen Speicher, der Anweisungen speichert, die bei Ausführung durch den einen oder die mehreren Prozessoren die erste Basisstation zu Folgendem veranlassen:
Senden einer Nachricht, die angibt, dass eine Paketdateneinheit-(Packet Data Unit, PDU)-Sitzung einer drahtlosen Vorrichtung in einem Bereich zulässig ist; und
Empfangen von Funkressourcensteuerung (Radio Resource Control, RRC)-Konfigurationsparametern einer oder mehrerer Zellen, die basierend auf dem Bereich bestimmt werden;
eine zweite Basisstation, umfassend: einen oder mehrere Prozessoren und Speicher, in dem Anweisungen gespeichert sind, die bei Ausführung durch den einen oder die mehreren Prozessoren die zweite Basisstation zu Folgendem veranlassen:
Empfangen der Nachricht von der ersten Basisstation; und
Senden der RRC-Konfigurationsparameter an die erste Basisstation als Reaktion auf die Nachricht.

## Revendications

1. Procédé comprenant :
la réception, par une seconde station de base depuis une première station de base, d'un message indiquant qu'une session d'unité de données par paquet, PDU, d'un dispositif sans fil est autorisée dans une zone ;
l'envoi, par la seconde station de base à la première station de base en réponse au message, de paramètres de configuration de commande des ressources radio, RRC, d'une ou de plusieurs cellules déterminés sur la base de la zone.

2. Procédé selon la revendication 1, dans lequel les une ou plusieurs cellules sont destinées à une double connectivité du dispositif sans fil.

3. Procédé selon la revendication 1 ou 2, dans lequel les une ou plusieurs cellules appartiennent à un groupe de cellules secondaire.

4. Procédé selon l'une quelconque des revendications 1 à 3, comprenant également la sélection, par la seconde station de base, des une ou plusieurs cellules sur la base des une ou plusieurs cellules associées à la zone.

5. Procédé selon l'une quelconque des revendications 1 à 4, dans lequel la zone est l'une ou plusieurs parmi :
une zone d'inscription ;
une technologie d'accès radio ;
un réseau mobile terrestre public, PLMN ;
une cellule ;
une zone de suivi ; et
une zone de service de réseau de données local, LADN.

6. Seconde station de base comprenant un ou plusieurs processeurs et une mémoire stockant des instructions qui, lorsqu'elles sont exécutées par les un ou plusieurs processeurs, amènent la seconde station de base à réaliser le procédé selon l'une quelconque des revendications 1 à 5.

7. Support non transitoire lisible par ordinateur comprenant des instructions qui, lorsqu'elles sont exécutées par un ou plusieurs processeurs d'une seconde station de base, amènent la seconde station de base à réaliser le procédé selon l'une quelconque des revendications 1 à 5.

8. Procédé comprenant :
l'envoi, par une première station de base vers une seconde station de base, d'un message indiquant qu'une session d'unité de données par paquet, PDU, d'un dispositif sans fil est autorisée dans une zone ;
la réception, par la première station de base depuis la seconde station de base en réponse au message, de paramètres de configuration de commande des ressources radio, RRC, d'une ou de plusieurs cellules déterminés sur la base de la zone.

9. Procédé selon la revendication 8, dans lequel les une ou plusieurs cellules sont destinées à une double connectivité du dispositif sans fil.

10. Procédé selon la revendication 8 ou 9, dans lequel les une ou plusieurs cellules appartiennent à un groupe de cellules secondaire.

11. Procédé selon l'une quelconque des revendications 8 à 10, comprenant également la réception, par la première station de base depuis une fonction de gestion d'accès et de mobilité, AMF, d'un message de mis en place indiquant que la session PDU est autorisée dans la zone.

12. Procédé selon l'une quelconque des revendications 8 à 11, dans lequel la zone est l'une ou plusieurs parmi :
une zone d'inscription ;
une technologie d'accès radio ;
un réseau mobile terrestre public, PLMN ;
une cellule ;
une zone de suivi ; et
une zone de service de réseau de données local, LADN.

13. Première station de base comprenant un ou plusieurs processeurs et une mémoire stockant des instructions qui, lorsqu'elles sont exécutées par les un ou plusieurs processeurs, amènent la première station de base à réaliser le procédé selon l'une quelconque des revendications 8 à 12.

14. Support non transitoire lisible par ordinateur comprenant des instructions qui, lorsqu'elles sont exécutées par un ou plusieurs processeurs d'une première station de base, amènent la première station de base à réaliser le procédé selon l'une quelconque des revendications 8 à 12.

15. Système, comprenant :
une première station de base comprenant : un ou plusieurs processeurs et une mémoire stockant des instructions qui, lorsqu'elles sont exécutées par les un ou plusieurs processeurs, amènent la première station de base à :
envoyer un message indiquant qu'une session d'unité de données par paquet, PDU, d'un dispositif sans fil est autorisée dans une zone ; e
recevoir des paramètres de configuration de commande des ressources radio, RRC, d'une ou de plusieurs cellules déterminés sur la base de la zone ;
une seconde station de base comprenant : un ou plusieurs processeurs et une mémoire stockant des instructions qui, lorsqu'elles sont exécutées par les un ou plusieurs processeurs, amènent la seconde station de base à :
recevoir le message de la première station de base ; et
envoyer les paramètres de configuration RRC à la première station de base en réponse au message.
